# EUROPÄISCHE PATENTSCHRIFT

(11) **EP 3 927 536 B1**
(45) Veröffentlichungstag und Bekanntmachung des Hinweises auf die Patenterteilung: **03.01.2024**
(21) Anmeldenummer: 21700148.6
(22) Anmeldetag: 20.01.2021
(51) Int. Cl.: B29D 30/72, B23K 26/40, B29D 30/00

(54) **VERFAHREN UND VORRICHTUNG ZUM MARKIEREN VON REIFEN MITTELS LASERSTRAHLEN**
APPARATUS AND METHOD FOR MARKING TYRES WITH LASERBEAMS
APPAREIL ET PROCÉDÉ DE MARQUAGE DE PNEUS UTILISANT DES FAISCEAUX LASER

(30) Priorität: 20.01.2020 WO PCT/EP2020/051243; 24.06.2020 EP 20182061
(43) Veröffentlichungstag der Anmeldung: 29.12.2021
(73) Patentinhaber: Dengler, Stefan, 75365 Calw-Stammheim (DE)
(72) Erfinder: Dengler, Stefan, 75365 Calw-Stammheim (DE)
(74) Vertreter: Flügel Preissner Schober Seidel
(86) Internationale Anmeldenummer: PCT/EP2021/051201
(87) Internationale Veröffentlichungsnummer: WO 2021/148467

(56) Entgegenhaltungen:
- EP-A1- 2 792 474
- EP-A1- 3 238 928
- EP-A2- 0 162 686
- EP-A2- 1 792 685
- DE-A1- 19 822 323
- DE-A1-102007 028 933
- DE-A1-102014 211 325
- DE-U1-202005 002 355
- DE-U1-202006 008 591
- DE-U1-202017 103 420
- JP-A- 2001 259 489
- JP-A- 2012 223 976
- JP-A- 2013 151 079
- JP-A- 2016 141 276
- US-A1- 2006 151 451
- US-A1- 2013 200 641
- US-A1- 2015 165 704

## Beschreibung

Die Erfindung betrifft ein Verfahren zum Markieren von Reifen. Die Erfindung bezieht sich ferner auf eine Markiervorrichtung, mit der sich ein solches Verfahren durchführen lässt, und auf eine Haltevorrichtung, die bei einer solchen Markiervorrichtung Anwendung findet.

Es ist bekannt, Reifen mit Hilfe von Laserstrahlen mit einer oder mehreren Markierungen zu versehen. Bei der Markierung handelt es sich insbesondere um eine Schrift, eine Kennzeichnung, eine Grafik oder einen Strich- oder Matrixcode, wie er beispielsweise aus DE 20 2015 009 105 U1 bekannt ist.

Eine Einrichtung zum Anbringen von derartigen Markierungen oder Beschriftungen an Reifen, die zudem eine Bildaufnahmeeinheit zum Erfassen des zu markierenden Reifens aufweist, offenbart DE 198 22 323 C2.

Ein System zum Markieren eines Fahrzeugreifens wird außerdem in EP 1 636 117 B1 beschrieben. Das System umfasst eine Steuereinheit, eine Lesevorrichtung, welche eine Referenzposition an dem Reifen ermittelt, und einen Laserapplikator, der eine Markierung an dem Reifen anbringt. Der Reifen wird so ausgerichtet, dass der Laserapplikator die Markierung ausgehend von der Referenzposition an einer bestimmten Stelle des Reifens anbringen kann.

Eine weitere Vorrichtung zum Markieren von Reifen wird in WO 2018/224601 A1 beschrieben. Der Reifen wird auf einer Transportvorrichtung grob platziert und anschließend mittels einer Zentriervorrichtung zentriert.

DE 10 2007 028 933 A1 beschreibt ein Verfahren zur Bestimmung der Position zum Anbringen eines Kennzeichens an einer Seitenwand eines Fahrzeugluftreifens mittels eines Laserschreibkopfes. Der Laserschreibkopf ist auf einer rotierenden Vorrichtung über dem Reifen angebracht und wird bezüglich der Drehachse des Reifens zentriert. Hierfür wird die Winkelposition des aufzubringenden Kennzeichens durch Abtasten/Vermessen der Seitenwand nach dem Lichtschnittverfahren rechnerisch ermittelt. Beim Vermessen/Abtasten der Reifenseitenwand mittels des Lichtschnittsensors wird ein an der Seitenwand konzentrisch zur Reifenachse kreisförmig umlaufendes Element zur rechnerischen Bestimmung des Mittelpunktes beziehungsweise der Drehachse des Reifens herangezogen, und es wird ein etwaiger Versatz der Drehachse des positionierten Laserschreibkopfes zur Drehachse des Reifens ermittelt, wobei der Laserschreibkopf das Kennzeichen unter Berücksichtigung des berechneten Versatzes anbringt.

DE 20 2005 000 640 U1 betrifft eine Vorrichtung zum Markieren eines Reifens mittels eines Lasers. Zur Erkennung eines Symbols auf dem Reifen erfasst ein Lichtschnitt-Sensor ein Höhenprofil eines reliefartigen Symbols. Hierzu wird der Lichtschnitt-Sensor auf einem Schwenkarm in einer Umdrehung über den Reifen geführt. Durch das erkannte Symbol, das mit einem hinterlegten Referenzprofil abgeglichen wird, wird die vorgeschrieben Markierungsposition ausgehend von den zu dem Symbol im System hinterlegten Daten ermittelt.

Weitere Vorrichtungen und Verfahren zum Markieren von Reifen sind in EP 3238928 A1 und US 2006151451 A1 offenbart.

Ein Beschichtungsverfahren zur automatischen Beschichtung des Bereichs, in dem weißer Gummi freiliegt, offenbart JP 2001 259489 A. Das Verfahren sieht vor, dass ein Beschichtungsmaterial auf den Bereich des weißen Gummis aufgetragen wird, der in dem Seitenwandteil eines Reifens vorhanden ist. Der freiliegende Teil aus weißem Gummi wird mit einer Kamera durch Drehen des Reifens erfasst, und das Beschichtungsmaterial wird aufgetragen, wenn die erfasste Fläche des freiliegenden Teils aus weißem Gummi größer ist als ein zuvor festgelegter Wert.

JP 2016 141276 A offenbart ein Steuerungsverfahrens für eine Reifengreifvorrichtung, das dazu dient, eine Verformung des Reifens zu vermeiden, wenn ein Greifmechanismus in den Wulstteil des Reifens eingeführt wird, um den Reifen zu greifen.

Eine Vorrichtung zum Transportieren der Karkasse eines Reifenrohlings in einer horizontalen Position, ohne eine Verformung zu verursachen, offenbart EP 0 162 686 A2. Die Vorrichtung umfasst eine untere Wulststütze, eine konzentrische Reifenschulterstütze und einen Satz von Fingern zum Stützen des oberen Wulstes der Karkasse. Die Finger sind durch eine Feder in einer Position vorgespannt, in der sie mit dem oberen Wulst in Eingriff stehen. Die Finger können radial nach innen bewegt werden, während die Karkasse entweder auf die Vorrichtung gesetzt oder von ihr entfernt wird.

Ein Verfahren und eine Vorrichtung zur Identifizierung der dreidimensionalen Koordinaten eines Zielbereichs auf einem Reifen offenbart EP 1 792 685 A2. Das Verfahren umfasst: Aufnehmen eines digitalen Bildes eines Reifens; Auffinden einer Kante eines Reifenwulstes unter Verwendung von Pixel-Helligkeitswerten aus dem Reifenbild; Berechnen des Mittelpunkts und des Radius des Reifenwulstkreises unter Verwendung einer Vielzahl von Bildpixeln auf dem Reifenwulstrand; und Durchführen einer Pixel-Helligkeitssuche um den Wulstumfang unter Verwendung des Mittelpunkts und des Radius des Wulstkreises, um die X-, Y-Koordinaten des Zielbereichs zu identifizieren. Die Z-Koordinate und die Neigung des Zielbereichs werden aus der Berechnung der Entfernung mehrerer Punkte in der Region bestimmt.

Derartige Vorrichtungen und Verfahren weisen das Problem auf, dass nur ein Referenzpunkt auf dem Reifen zur Bestimmung der Position des Reifens identifiziert und herangezogen wird. Die Positionierung einer Markierung wird anschließend anhand von vorgegebenen Positionsdaten bestimmt, die unabhängig von dem individuellen Reifen auf einer Datenbank oder einem Referenzprofil hinterlegt sind. Eine individuelle Abweichung der Position oder Lage des zu markierenden Bereichs des Reifens wird nicht berücksichtigt. Infolgedessen kann die eingebrachte Markierung von der gewünschten Position oder Ausrichtung abweichen oder auch eine Verzerrung aufweisen. Indem die Markierung üblicherweise ein erkennbares Markierfeld ausfüllt, sind bereits kleine Abweichungen zum Rand des Markierfelds erkennbar.

Der Erfindung liegt die Aufgabe zugrunde, ein Verfahren und eine Vorrichtung zum Markieren von Reifen zu schaffen, die eine schnelle und präzise Kennzeichnung des Reifens sicherstellen.

Diese Aufgabe wird durch ein Verfahren gemäß Anspruch 1 und eine Markiervorrichtung gemäß Anspruch 13 gelöst. Bevorzugte Ausgestaltungen der Erfindung werden in den Ansprüchen 2 bis 12 sowie 14 und 15 definiert.

Das erfindungsgemäße Verfahren zum Markieren von Reifen mittels Laserstrahlen wird bei einer Markiervorrichtung verwendet, die zumindest eine Messeinrichtung, eine Lasereinrichtung, eine Steuereinrichtung und eine um eine Drehachse rotierbare Haltevorrichtung umfasst. Die Reifen haben eine Lauffläche, eine erste, in einer liegenden Position obere Seitenwand, eine zweite, in einer liegenden Position untere Seitenwand, eine Rollachse und ein spezifisches Merkmal. Darüber hinaus definiert der Reifen ein Markierfeld, das heißt, er stellt ein Markierfeld zur Verfügung, in dem der Reifen zu markieren ist. Ferner umfasst der Reifen üblicherweise einen ersten Wulst und einen zweiten Wulst. Der Wulst bildet einen verdickten Rand, der dazu dient, den Reifen mit einer Felge zu verbinden. Um beispielsweise einen festen Sitz des Reifens auf der Felge zu schaffen, kann der Wulst einen Wulstkern aufweisen, der aus mehreren verdrillten Stahldrähten besteht. Die Steuereinrichtung ist ausgebildet, einen Referenzdatensatz zu verarbeiten und Steuersignale für zumindest die Lasereinrichtung zu generieren. Die Messeinrichtung ist relativ zu dem Reifen bewegbar und ausgebildet, zumindest einen Teilbereich des Reifens optisch zu erfassen. Die ein Arbeitsfeld aufweisende Lasereinrichtung ist relativ zu dem Reifen bewegbar und ausgebildet, mittels Laserstrahlen eine Markierung in dem Markierfeld zu erzeugen. Die Haltevorrichtung ist geeignet, den Reifen zu ergreifen und auszurichten. Der Referenzdatensatz umfasst Referenzdaten über zumindest die Soll-Position des spezifischen Merkmals des Reifens, die Soll-Position des Markierfelds des Reifens und die zu erzeugende Markierung.

In einer ersten Ausgestaltung weist das erfindungsgemäße Verfahren die folgenden Verfahrensschritte auf:
a) Ein zu markierender Reifen wird zu der Markiervorrichtung gefördert.
b) Ein dem Reifen zugeordneter Referenzdatensatz wird in die Steuereinrichtung geladen.
c) Zumindest ein Teilbereich des Reifens wird mittels der Messeinrichtung optisch erfasst. Ein Messdatensatz wird generiert, der Ist-Daten über zumindest die Ist-Position des spezifischen Merkmals und/oder die Ist-Position des Markierfelds des Reifens umfasst.
d) Die Ist-Position des Markierfelds (51, 52) des Reifens (40) wird durch den Referenzdatensatz (DS_{R}) eingegrenzt und optisch bestimmt;
e) Die Steuereinrichtung generiert das Steuersignal für die Lasereinrichtung unter Berücksichtigung des Messdatensatzes.
f) Die Lasereinrichtung wird mittels des Steuersignals in einer Markierposition positioniert und in Bezug auf die Ist-Position des Markierfelds ausgerichtet.
g) Die Markierung wird mittels der Lasereinrichtung in dem Markierfeld erzeugt.

Das erfindungsgemäße Verfahren weist in einer zweiten Ausgestaltung die folgenden Verfahrensschritte auf.
a) Ein zu markierender Reifen wird zu der Markiervorrichtung gefördert.
b) Ein dem Reifen zugeordneter Referenzdatensatz wird in die Steuereinrichtung geladen.
c) Zumindest ein Teilbereich des Reifens wird mittels der Messeinrichtung optisch erfasst. Ein Messdatensatz wird generiert, der Ist-Daten über zumindest die Ist-Position des spezifischen Merkmals und/oder die Ist-Position des Markierfelds des Reifens umfasst.
d) Die Steuereinrichtung berechnet eine Abweichung zwischen den Referenzdaten und den Ist-Daten und generiert das Steuersignal für die Lasereinrichtung unter Berücksichtigung der berechneten Abweichung.
e) Die Lasereinrichtung wird mittels des Steuersignals in einer Markierposition positioniert und in Bezug auf die Ist-Position des Markierfelds ausgerichtet.
f) Die Markierung wird mittels der Lasereinrichtung in dem Markierfeld erzeugt.

Der Vorteil der Erfindung ist in beiden Ausgestaltungen, dass die Markierung zuverlässig und präzise an der Stelle aufgebracht wird, an der sie vorgesehen ist. Bislang kam es unter anderem zu Abweichungen zwischen der Stelle, an der die Markierung tatsächlich aufgebracht wurde, und der Stelle, an der die Markierung vorgesehen ist. Dies liegt unter anderem daran, dass der individuelle, zu markierende Reifen von seiner idealtypischen Form gemäß der Konstruktionszeichnung abweichen kann, was insbesondere bei runderneuerten Reifen vorkommen kann.

Unter einer Abweichung von der idealtypischen Form ist insbesondere eine wellenförmige Verformung der Seitenwand zu verstehen, die beispielsweise durch Eigenspannungen im Reifen verursacht werden können. Darüber hinaus können Abweichungen auch durch die Haltevorrichtung verursacht werden, indem beispielsweise die Seitenwand durch die punktuelle Reifenaufnahme beim Anheben des Reifens ausbeult. Darüber hinaus ist es nicht immer gegeben, dass die Haltevorrichtung den Reifen zentral ergreift. Dies kann gerade bei Reifen mit einem großen Durchmesser dazu führen, dass, wenn die Lasereinrichtung ohne Rückkopplung mit der tatsächlichen Position des Reifens über der zu erwartenden Position über dem Reifen positioniert wird, es zu Abweichungen in der Positionierung der Markierung im Markierfeld kommen kann.

Diese Überprüfung oder Bestimmung der korrekten Position erfolgt bei der ersten Ausgestaltung der Erfindung dadurch, dass anhand des Referenzdatensatzes die Suche nach der Ist-Position des Markierfelds eingegrenzt wird. Das Markierfeld wird dann zuverlässig etwa durch eine in der Regel vorhandene Umrandung optisch erkannt.

Nach Maßgabe der zweiten Ausgestaltung der Erfindung wird eine Abweichung automatisch zwischen der in einem Referenzdatensatz hinterlegten Information und der gemessenen Information, wie beispielsweise ein Abgleich der Soll-Position zu der tatsächlich erfassten Ist-Position, auf dem Reifen beim Einbringen der Markierung im Markierfeld berücksichtigt.

In beiden Fällen ist sichergestellt, dass das Merkmal an der vorgesehenen Stelle unter Berücksichtigung des individuellen, zu markierenden Reifens aufgebracht wird. Die präzise Positionierung der Markierung reduziert den Ausschuss an Reifen, die eine Markierung aufweisen, welche die Anforderung zu der Position der eingebrachten Markierung nicht erfüllen. Ferner ermöglicht das erfindungsgemäße Verfahren auch eine schnelle Positionierung, da die Korrektur automatisiert an den individuellen Reifen angepasst wird.

Die Markiervorrichtung weist eine Haltervorrichtung zur Positionierung des Reifens und/oder Drehung des Reifens um die Rollachse auf. Der durch die Haltevorrichtung getragene Reifen übt auf die Haltevorrichtung eine durch seine Schwerkraft bedingte Kraft aus, die eine durch die Haltevorrichtung auf den Reifen ausgeübte Gegenkraft zur Folge hat. Wird ein Reifen durch die Haltevorrichtung gehalten, so bedeutet dies, wenn sich Haltevorrichtung und Reifen nicht oder mit konstanter Geschwindigkeit bewegen, dass sich die durch den Reifen auf die Haltevorrichtung ausgeübte Kraft und die durch die Haltevorrichtung auf den Reifen ausgeübte Gegenkraft gegeneinander aufheben. Mittels der Aufnahme des Reifens an einem seiner Wülste wird ein gleichförmiger Kraftfluss durch den Reifen erzielt und die Krafteinleitung durch die Haltevorrichtung großflächig im Wulst des Reifens verteilt. Der Reifen wird auf diese Weise besonders schonend behandelt, ein Umstand, der insbesondere bei Neureifen von Vorteil ist.

Die Haltevorrichtung ist optional so ausgestaltet, dass sie ins Innere des Reifens eingebracht wird, insbesondere in einer etwa parallel zu der Rollachse verlaufenden Richtung. Nachdem die Haltevorrichtung an den Wülsten des Reifens angebracht wurde, kann der Reifen angehoben werden. Dies geschieht vorzugsweise, indem die Haltevorrichtung angehoben wird. Zweckmäßigerweise kann die Haltevorrichtung den zu markierenden Reifen frei im Raum schwebend halten, sodass die Außenseiten der Seitenwände für die Markierung durch die Lasereinrichtung frei zugänglich sind.

Vorzugsweise kann die Haltevorrichtung dazu ausgebildet sein, den zu markierenden Reifen, beispielsweise mit Hilfe von Zentrierungsanschlägen, für nachfolgende Prozessschritte zu zentrieren, sodass auf eine zusätzliche Vorrichtung zu diesem Zweck verzichtet werden kann. Das Zentrieren kann ein Positionieren des Reifens in radialer Richtung, insbesondere quer zu einer Prozessrichtung, in welcher die zu markierenden Reifen durch die Vorrichtung gefördert werden, und/oder ein Ausrichten der Reifen in ihrer Umfangsrichtung beinhalten.

Zur Positionierung der Markierung wird mit Hilfe einer Messeinrichtung (Mustererkennung oder 2D-/3D-Messeinrichtung) zumindest ein Teilbereich des Reifens erfasst und digitalisiert, um Merkmale, die am Reifen vorhanden sind, als Referenz zur Positionierung der Markierung zu verwenden.

Hierzu wird die Lasereinrichtung mit der Messeinrichtung relativ zu dem zu markierenden Reifen vorzugsweise axial und radial positioniert. Unter der relativen Bewegung zu dem Reifen ist zu verstehen, dass der Reifen beispielsweise mittels der Haltevorrichtung um die Rollachse gedreht wird, während die Lasereinrichtung und Messeinrichtung in der Markiervorrichtung fixiert sind oder, dass der Reifen fixiert ist und die Lasereinrichtung und die Messeinrichtung über dem Reifen zur Positionierung bewegt werden.

Die Messeinrichtung kann eine Kamera umfassen, welche Abbildungen des Reifens, insbesondere der Seitenwand, erstellt. Die Messeinrichtung kann ferner einen optischen Abtaster und/oder Scanner umfassen, die im Unterschied zur Kamera selbst Licht ausstrahlt, insbesondere in Form eines punktförmigen Strahls, um anhand der Reflexionen dieses Strahls die Oberfläche des Reifens zu erfassen. Ein Abbild des Reifens wird dadurch erstellt, dass der Lichtstrahl über die zu erfassende Oberfläche geführt wird. Ferner kann die Messeinrichtung ausgebildet sein, die Topografie der Reifenoberfläche zu erfassen. Die Messeinrichtung weist ferner vorzugsweise eine Optik und einen Lichtsensor auf. Im Falle einer Kamera kann dies ein Kamerachip sein oder im Falle der abtastenden Einrichtung/Scanner ein lichtempfindlicher Sensor mit geringerer Auflösung. Generell ist die Messeinrichtung in einem vorgegebenen Abstand zu dem Reifen positioniert, einem sogenannten Arbeitsabstand. Der Arbeitsabstand definiert zusammen mit der Optik der Messeinrichtung die Größe des zu erfassenden Bereichs.

Die Lasereinrichtung kann in der Regel einen Laser, insbesondere einen CO₂-Laser, eine Strahlaufweitung, einen Scanner, eine Planfeldoptik, eine Absaugvorrichtung, eine Filtereinrichtung und/oder eine Sicherheitseinrichtung, wie etwa einem Shutter, aufweisen. Die Markierung entsteht insbesondere dadurch, dass der Laserstrahl der Lasereinrichtung Material von der Oberfläche innerhalb des Arbeitsfelds, das auf dem Reifen liegt, abnimmt. Die Größe des Arbeitsfelds ist durch den Abstand der Lasereinrichtung zu dem Reifen definiert und zeichnet sich dadurch aus, dass innerhalb des Arbeitsfelds Laserstrahlen Material von dem Reifen abtragen können, ohne dass die Lasereinrichtung relativ zu dem Reifen bewegt wird.

Die Steuereinrichtung umfasst vorzugsweise einen Computer, einen Prozessor und/oder eine andere datenverarbeitende Anlage. Die Steuereinrichtung ist zur Übertragung von Daten und Signalen mit der Messeinrichtung sowie mit der Lasereinrichtung verbunden. Die Steuereinrichtung ist ferner ausgebildet Steuersignale an die Lasereinrichtung zu übermitteln, anhand welchen zum einen die Lasereinrichtung positioniert wird und/oder zum anderen die erzeugte Markierung derart korrigiert wird, sodass die Markierung korrekt in dem Markierfeld eingebracht wird.

Der Referenzdatensatz umfasst vorzugsweise Informationen zu der idealtypischen Form gemäß der Konstruktionszeichnung eines Reifens, der theoretisch identisch zu dem zu markierenden Reifen ist. Der Referenzdatensatz kann ferner ausgebildet sein, mehrere verschiedene Reifen zu umfassen. Üblicherweise weist ein Datensatz eine Identifikationsnummer oder Seriennummer zu einem spezifischen Reifen auf, mittels welcher der Referenzdatensatz des zu markierenden Reifens identifiziert werden kann. Beispielsweise ist es somit anhand der Identifikationsnummer möglich, einen Referenzdatensatz durch einen Bediener der Markiervorrichtung zu dem zu markierenden Reifen zuzuordnen. Ferner umfasst der Referenzdatensatz Soll-Informationen zu bestimmten Merkmalen des Reifens, wie der zu erzeugenden Markierung, der Soll-Position des spezifischen Merkmals oder der Soll-Position des Markierfelds.

Die Digitalisierung des mit der Messeinrichtung erfassten Reifens kann mit Hilfe der Messeinrichtung erfolgen oder vorzugsweise mit Hilfe der Steuereinrichtung, welche die von der Messeinrichtung erfassten Daten in eine maschinenlesbare Form bringt, vorzugsweise digitalisiert. Insbesondere ist die Steuereinrichtung ausgebildet, anhand der von der Messeinrichtung erfassten Daten das spezifische Merkmal auf der Reifenoberfläche zu identifizieren. Dies kann beispielsweise mittels einer Bilderkennung erfolgen, insbesondere dann, wenn eine Kamera als Messeinrichtung verwendet wird.

Eine zweidimensionale Erfassung gelingt besonders gut, wenn die Messeinrichtung als Kamera ausgebildet ist. Eine dreidimensionale Erfassung gelingt in einfacher Weise durch eine die Oberflächen abtastende Einrichtung. Es ist aber auch möglich, dass eine dreidimensionale Erfassung der Seitenwand mittels einer Kamera erfolgt, nämlich dadurch, dass das durch die Kamera zweidimensional aufgenommene Bild digital bearbeitet wird, um daraus eine dreidimensionale Repräsentation der Seitenwand zu errechnen. Es ist auch möglich, dass die Messeinrichtung zwei oder mehrere Kameras aufweist, mittels welchen eine dreidimensionale Abbildung der Seitenwand des Reifens erfasst werden kann.

Das spezifische Merkmal, das an dem Reifen vorhanden ist, kann ein Schriftzug, eine Abbildung oder ein sonstiges identifizierbares Zeichen, wie beispielsweise ein Logo, ein Buchstabe, eine MXT-Fünf-Punkt-Markierung oder eine Punktmarke mit Code-Ring, darstellen. Das spezifische Merkmal ist dazu geeignet, die Position oder Orientierung und Ausrichtung oder Winkellage des Reifens zu bestimmen. Dies gelingt beispielsweise dadurch, dass das spezifische Merkmal eine zweidimensionale Struktur hat, so dass dessen Orientierung erfasst werden kann. Beispielsweise weist das spezifische Merkmal eine Umrandung auf, die vergleichbar zu einer im Nachfolgenden beschriebenen Umrandung des Markierfelds ist. Das spezifische Merkmal kann auch zwei voneinander beabstandete Punkte oder Erhebungen aufweisen, mittels welcher die Orientierung des Reifens erfasst werden kann. Vorzugsweise wird das spezifische Merkmal während dem Herstellungsprozess des Reifens hergestellt, insbesondere während des Heizvorgangs für die Vulkanisation des Reifens. Das spezifische Merkmal kann einen insbesondere konturierten Vorsprung oder Rücksprung an der Oberfläche der Seitenwand aufweisen. In vorteilhafter Weise ist das spezifische Merkmal zugleich das Markierfeld. Dies bietet sich bei Reifen an, die bis auf das Markierfeld kein erkennbares Unterscheidungsmerkmal aufweisen. In einer weiteren vorteilhaften Ausgestaltung ist das spezifische Merkmal derart ausgebildet, unterschiedliche Reifen zu differenzieren und einen entsprechenden Referenzdatensatz zu dem zu markierenden Reifen anhand des spezifischen Merkmals zuzuordnen.

Das Markierfeld stellt die Fläche dar, in der die Markierung erzeugt werden soll. Das Markierfeld kann an einen bestimmten Abschnitt an der glatten Oberfläche der Seitenwand des Reifens vorgesehen sein. Das Markierfeld kann beispielsweise durch einen umlaufenden vorstehenden oder rückspringenden Rand begrenzt und/oder hervorgehoben werden, so dass das Markierfeld die Fläche ist, die von dem Rand eingeschlossen ist. Ferner kann das Markierfeld eine flächige Erhebung oder Vertiefung am Reifen sein. Üblicherweise wird die sogenannte "Tire Identification Number" (TIN-Nummer), auch als DOT-Nummern bekannt, in einem derartig hervorgehobenen Markierfeld eingebracht. Das Markierfeld kann aber auch einen Bereich auf dem Reifen darstellen, der nicht visuell erkennbar abgegrenzt ist.

Die Markierung kann eine zwei- oder dreidimensionale Matrix, wie einen Barcode oder einen QR-Code, darstellen oder einen Schriftzug umfassen. Ferner kann die Markierung auch ein Bild oder eine Graphik aufweisen, oder Kombinationen davon.

Die in Verfahrensschritt d) berechnete Abweichung beschreibt einen sogenannten Offset, wobei der Offset insbesondere eine Verschiebung des Reifens in einer X- und Y-Richtung angibt, welche in der Ebene, die durch die radiale Richtung und die Umfangsrichtung aufgespannt wird, liegen. Alternativ kann der Offset auch durch die radiale Richtung und die Umfangsrichtung bestimmt werden. Das heißt, der Offset gibt eine Verschiebung oder Translation an, während die Winkellage eine Drehung des spezifischen Merkmals im Vergleich zu der erwarteten Orientierung des spezifischen Merkmals darstellt. Die Berechnung der Abweichung erfolgt, indem die Referenzdaten, welche die Soll-Informationen zu dem Reifen aufweisen, mit den erfassten Ist-Daten abgleicht, insbesondere der Soll-Position zu der Ist-Position.

Die in Verfahrensschritt e) beschriebene Positionierung der Lasereinrichtung umfasst zum einen die örtliche Positionierung der Lasereinrichtung in der Nähe oder über dem Markierfeld und/oder zum anderen die vorzugsweise senkrechte Ausrichtung der Lasereinrichtung relativ zu dem Markierfeld. Die senkrechte Ausrichtung ist insbesondere zur Markierung im Bereich der Seitenwand des Reifens mit einer starken Krümmung von beispielsweise 30° bis 40° vorteilhaft, wie es beispielsweise im Bereich einer sogenannten Schulter von Flugzeugreifen auftritt.

Die Ausrichtung der Lasereinrichtung kann zum einen dadurch erfolgen, dass lediglich die emittierten Laserstrahlen die berechnete Abweichung berücksichtigen, sodass eine wiederholte Positionierung nicht notwendig ist. Dies ist insbesondere dann vorteilhaft, wenn das Ist-Markierfeld weiterhin im Arbeitsfeld der Lasereinrichtung liegt. Die Ausrichtung kann aber auch eine neue Positionierung unter Berücksichtigung der berechneten Abweichung der Lasereinrichtung relativ zu dem Reifen umfassen.

In einer vorteilhaften Ausgestaltung wird die Markierung durch das Steuersignal kalibriert. Dies bedeutet, dass die Form der zu erzeugenden Markierung an die Oberfläche derart angepasst wird, dass keine Verzerrung der Markierung auftritt. Dies ist insbesondere dann vorteilhaft, wenn die Lasereinrichtung nicht senkrecht zu der zu markierenden Oberfläche steht.

In einer weiteren vorteilhaften Ausgestaltung umfasst die Markiervorrichtung eine Vor-Messeinrichtung, die ausgebildet ist, Vor-Messdaten zu dem Reifen zu erfassen. Vorzugweise werden die Vor-Messdaten vor dem Verfahrensschritt b) erfasst. Ferner kann somit die Messeinrichtung und/oder die Lasereinrichtung durch die Vor-Messdaten vorpositioniert werden. Dies weist den Vorteil auf, dass die benötigte Zeit zur Markierung des Reifens deutlich reduziert werden kann, da bereits die Positionierung der Messeinrichtung und/oder Lasereinrichtung vorgenommen werden kann, während der Reifen noch zur Markiervorrichtung gefördert wird. Die Vor-Messeinrichtung ist in einer möglichen Ausgestaltung ein Punktsensor, der dazu geeignet ist, eine Kontur des Reifens oder ein Höhenprofil des Reifens zu erfassen. Folglich kann die Messeinrichtung und/oder die Lasereinrichtung bereits während des Einforderns in den entsprechenden Arbeitsabstand zu dem Reifen gebracht werden.

Wie oben bereits beschrieben wurde, vereinfacht die Vorpositionierung der Messeinrichtung die Erkennung des spezifischen Merkmals. Die Vorpositionierung gelingt insbesondere dadurch, dass abhängig von dem zu markierenden Reifen das spezifische Merkmal an einer bestimmten Position erwartet wird. Dazu ist es notwendig, den Typ des zu markierenden Reifens zu kennen. Dies kann beispielsweise dadurch erfolgen, dass beim Fördern des Reifens in die Haltevorrichtung der Typ des Reifens erfasst wird, beispielsweise mittels eines auf dem Reifen bereits vorhandenen Barcodes oder QR-Codes oder durch die Schrifterkennung der auf dem Reifen abgebildeten Beschreibung des Reifens. Ferner ist es auch möglich, dass andere Mittel verwendet werden, um den Typ des Reifens zu erfassen, wie beispielsweise ein RFID-Code. Alternativ oder zusätzlich ist es auch möglich, dass die Erfassung des Typs des zu markierenden Reifens auch durch eine manuelle Eingabe erfolgt. Der Typ des Reifens bezieht sich auf eine Art des Reifens, so dass Reifen eines gleichen Typs in ihren Abmessungen und Positionierungen des spezifischen Merkmals im Wesentlichen übereinstimmen.

In einer weiteren Vorteilhaften Ausgestaltung der Markiervorrichtung, ist es möglich, den Reifen mittels der Haltevorrichtung zu zentrieren. Dieser Verfahrensschritt erfolgt vorzugsweise während dem Ergreifen des Reifens. Hierzu können beispielsweise die Anschläge der Haltevorrichtung radial nach außen bewegt werden. Die Rollachse des Reifens wird dabei an die Drehachse der Haltevorrichtung geführt und somit zentriert.

Es ist bevorzugt, dass der Referenzdatensatz Soll-Daten und der Messdatensatz Ist-Daten zu einer Kontur des Reifens umfassen. Entsprechend kann eine Abweichung zwischen der Soll-Kontur und der Ist-Kontur berechnet werden und ein Steuersignal für die Lasereinrichtung unter Berücksichtigung der berechneten Abweichung generiert werden.

Unter Kontur des Reifens ist ein Höhenprofil der Oberfläche des Reifens zu verstehen, das sich insbesondere entlang der radialen Richtung des Reifens erstreckt. Die Kontur weist demnach Informationen zu der Neigung der Oberfläche in radialer Richtung auf, die Korrektur der Abweichung unter Berücksichtigung der Kontur des Reifens ermöglicht unter anderem eine verzugsfreie Markierung in dem Markierfeld einzubringen. Dies ist insbesondere für einen "Quick Response" Code vorteilhaft, der auch als QR-Code bekannt ist. Ferner kann die Lasereinrichtung mittels der Steuersignale für die Lasereinrichtung senkrecht zu der Oberfläche oder dem zu markierenden Markierfeld unter Berücksichtigung der berechneten Abweichung durch die Kontur positioniert werden. Dies ist insbesondere zum Einbringen einer Markierung im Bereich der Reifenschulter oder dem Wulstbereich mit einer starken Krümmung relevant. Zur senkrechten Ausrichtung der Lasereinrichtung wird diese in einer vorteilhaften Ausgestaltung zusätzlich geschwenkt, sodass Laserstrahlen der Lasereinrichtung im Lot zur Oberfläche emittieren werden können.

Vorzugsweise umfasst die Ist-Kontur des Reifens zumindest die obere Seitenwand des Reifens und/oder die untere Seitenwand des Reifens. In einer vorteilhaften Ausgestaltung hiervon wird die Kontur der nicht erfassten Seitenwand durch ein Spiegeln der erfassten Seitenwand generiert. Beispielhaft wird die Ist-Kontur der oberen Seitenwand des Reifens gespiegelt, um die Ist-Kontur der unteren Seitenwand des Reifens zu generieren. Ebenso ist die umgekehrte Reihenfolge möglich. Dies ermöglicht ein schnelleres Verfahren, insbesondere wenn Markierungen auf beiden Seiten der Seitenwand aufgebracht werden müssen, da nur eine Seitenwand erfasst werden muss.

In vorteilhafter Weise wird aus den Messdaten ein dreidimensionales Modell des Reifens erstellt. Anhand des dreidimensionalen Modells kann anschließend eine Neigung in radialer und axialer Richtung für die Berechnung der Abweichung berücksichtigt werden.

Vorzugsweise umfasst der Referenzdatensatz Soll-Daten und der Messdatensatz Ist-Daten zu der Rollachse des Reifens. Die Ist-Rollachse wird bevorzugt berechnet, indem die Ausrichtung und Ist-Position des spezifischen Merkmals erfasst wird und davon ausgehend die Ist-Rollachse berechnet wird. Entsprechend kann eine Abweichung zwischen der Soll-Rollachse und der Ist-Rollachse berechnet werden und das Steuersignal für die Lasereinrichtung unter Berücksichtigung der berechneten Abweichung generiert werden. Die Abweichung unter Berücksichtigung der Rollachse ist insbesondere bei einem Schriftzug als Markierung oder einer länglichen Markierung im Allgemeinen vorteilhaft. Denn bereits eine geringe dezentrierte Lage des Reifens tritt bei derartigen Markierungen besonders hervor.

Es ist bevorzugt, dass die Soll-Positionsdaten und/oder die Ist-Positionsdaten durch einen von dem spezifischen Merkmal ausgehenden Winkel und einen von der Rollachse ausgehenden Radius bestimmt werden. Dies weist den Vorteil auf, dass die Information zur Positionierung der Markierung immer um die Rollachse zentriert ist. Somit lassen sich die Messeinrichtung und die Lasereinrichtung relativ zu der Rollachse unter Einhaltung geringer Toleranzen ausrichten, da der Reifen ebenfalls rund und symmetrischen ausgestaltet ist.

Es ist bevorzugt, dass die Steuereinrichtung ausgebildet ist, Steuersignale für die Messeinrichtung zu generieren.

In einer vorteilhaften Ausgestaltung hiervon wird die Messeinrichtung in einer vorbestimmten Messposition in Bezug auf den Reifen ausgerichtet. Die Messposition befindet sich hierzu in einem vorbestimmten Abstand zu dem Reifen. Demnach kann die Messeinrichtung in einem vorbestimmten Abstand zu dem spezifischen Merkmal positioniert werden, so dass die Größe des erfassten Teilbereichs definiert werden kann oder aber auch, dass unterschiedliche Größen von Reifen erfasst werden können. Insbesondere bei Reifen mit großen Durchmessern ist der erfasste Bereich wesentlich kleiner als die Seitenwand des Reifens, so dass nur Abschnitte der Seitenwand des Reifens mit der Messeinrichtung erfasst werden können.

Der Abstandssensor kann ein kontaktloser oder ein mit dem Reifen in Kontakt tretender Sensor oder Punktsensor sein, der die Höhe des Reifens bestimmt. Die Höhe des Reifens bezieht sich insbesondere auf die axiale Position, welche die obere und/oder die untere Seitenwand in der Haltevorrichtung einnimmt. Diese axiale Position der unteren und/oder oberen Seitenwand ist entscheidend für die Vorpositionierung der Messeinrichtung in der axialen Richtung.

Der Abstandssensor kann insbesondere die Höhe des Reifens vor der Positionierung des Reifens in der Haltevorrichtung erfassen, und daraus kann beispielsweise mit Hilfe der Steuereinrichtung die zu erwartende axiale Position der Seitenwand des Reifens in der Haltevorrichtung berechnet werden. Ferner kann der Abstandssensor auch derart angeordnet werden, dass er direkt die axiale Positionierung der Seitenwand des Reifens in der Haltevorrichtung selbst bestimmt, d.h. der Abstandssensor misst die Höhe des Reifens in der Haltevorrichtung erst dann, wenn der Reifen von der Haltevorrichtung gehalten wird.

Die axiale Richtung stimmt vorzugsweise mit der Rollachse des Reifens überein. Die Haltevorrichtung wird optional entlang der axialen Richtung in Richtung des Reifens bewegt, um diesen zu erfassen oder zu klammern. Die radiale Richtung und die Umfangsrichtung erstrecken sich senkrecht zu der axialen Richtung.

Es ist bevorzugt, dass die Messeinrichtung in einem ersten Koordinatensystem verfahren wird und die Lasereinrichtung in einem zweiten Koordinatensystem verfahren wird. Das erste Koordinatensystem steht in einem vorgegebenen Verhältnis zu dem zweiten Koordinatensystem. Vorzugsweise ist das vorgegebene Verhältnis ein konstantes Verhältnis. Das spezifische Merkmal bildet in einer vorteilhaften Ausgestaltung einen Referenzpunkt, insbesondere einen Nullpunkt, für das erste Koordinatensystem und das zweite Koordinatensystem. In einer vorteilhaften Ausgestaltung hiervon wird die Ausrichtung des ersten und des zweiten Koordinatensystems anhand des Referenzpunkts bestimmt. Die Verwendung zweier Koordinatensysteme ermöglicht eine individuelle Steuerung der Messeinrichtung und der Lasereinrichtung relativ zu einem gemeinsamen Referenzpunkt. Indem das spezifische Merkmal den gemeinsame Referenzpunkt darstellt, ist es möglich, die Toleranzen in der Positionierung des Reifens möglichst gering zu halten.

Demnach ist es bevorzugt, dass die Messeinrichtung und die Lasereinrichtung mittels Steuersignalen bewegt werden, welche aus Positionsdaten relativ zu dem Referenzpunkt generiert werden.

In einer bevorzugten Ausgestaltung bestimmt das Steuergerät die zu erzeugende Markierung anhand des Ist-Markierfelds. Dies ist insbesondere dann vorteilhaft, wenn zwei Markierfelder in dem erfassten Teilbereich des Reifens liegen. Entsprechend ist es dann möglich, die einzubringende Markierung automatisch an beispielsweise der Form und/oder der Größe des Markierfelds dem zu markierenden Markierfeld zuzuordnen.

In einer vorteilhaften Ausgestaltung wird der Referenzdatensatz zu dem Reifen erstellt, insbesondere vor Verfahrensschritt a). Hierfür wird ein sogenannter Masterreifen mittels der Messeinrichtung erfasst. Der Masterreifen kann ein zufällig gewählter Reifen sein, der als Referenz für die zu markierenden Reifen dienen kann. Dies weist den Vorteil auf, dass der Referenzdatensatz vergleichbar zu den zu markierenden Reifen ist und somit ein nur geringer Korrekturaufwand in der Abweichung berechnet werden muss, insbesondere für Reifen der gleichen Charge. Bei der Erstellung des Referenzdatensatzes wird insbesondere das spezifische Merkmal und das Markierfeld erfasst sowie deren Soll-Position und Soll-Winkellage bestimmt. Der Masterreifen weist in vorteilhafter Weise die idealen Abmessungen und die ideale Positionierung des spezifischen Merkmals auf.

In einer weiteren vorteilhaften Ausgestaltung bilden die Messeinrichtung und die Lasereinrichtung eine Einheit, bei der die Position der Messeinrichtung zu der Lasereinrichtung fixiert ist.

Dies bedeutet, dass der Abstand zwischen der Messeinrichtung und der Lasereinrichtung als auch deren Winkellage zeitlich fixiert ist, so dass für die Berechnung der Ansteuerung der Lasereinrichtung zur Markierung des Reifens diese(r) bekannte Abstand/Orientierung der Lasereinrichtung zu der Messeinrichtung verwendet werden kann. Somit ist es im Vergleich zu der Ausführungsform, bei der die Messeinrichtung zu der Lasereinrichtung zueinander beweglich angeordnet ist, nicht notwendig, die aktuelle Positionierung der Messeinrichtung gegenüber der Lasereinrichtung zu ermitteln.

Die Messeinrichtung und/oder die Lasereinrichtung können beispielsweise in einem gemeinsamen Gehäuse eingebaut sein oder an einem gemeinsamen Träger fixiert sein. Insbesondere folgt bei dieser Ausführungsform, dass, wenn die Messeinrichtung bewegt wird, auch die Lasereinrichtung bewegt wird.

Es ist bevorzugt, dass die Messeinrichtung und/oder die Lasereinrichtung zu der axialen Richtung schwenkbar sind.

Die Schwenkbarkeit der Messeinrichtung und/oder der Lasereinrichtung erfolgt insbesondere dadurch, dass die Messeinrichtung und/oder die Lasereinrichtung an einer Schwenkvorrichtung vorgesehen sind, mittels welcher diese Einrichtungen gegenüber der axialen Richtung geschwenkt werden können.

Von Vorteil ist das Vorsehen einer Schwenkvorrichtung zur senkrechten Ausrichtung in Bezug auf die Oberfläche des Reifens, um hierdurch ein gleichbleibend gutes Markierergebnis zu erreichen. Das wird insbesondere dann wichtig, wenn nicht nur die Seitenwand, sondern auch im Schulterbereich beziehungsweise der Lauffläche gelasert werden soll, wie es mitunter bei Flugzeugreifen notwendig ist, oder bei Reifen, die stark gewölbte Seitenwände haben, wie zum Beispiel sogenannte Off-the-Road (OTR)-Reifen.

Die Vorrichtung ermöglicht die Markierung auch auf der Stirnseite des Wulstes, so dass die Markierung ausschließlich am nicht montierten Reifen zu sehen ist. Dies ist zum Beispiel beim Fleet-Management zur Verfolgung/Erfassung der Karkassen beim Rücklauf in die Runderneuerung notwendig.

Ferner ermöglicht die schwenkbare Messeinrichtung und/oder Lasereinrichtung das Anbringen einer Markierung auf der oberen und unteren Seitenwand des Reifens. Ein aufwendiges Wenden des Reifens muss somit nicht durchgeführt werden. Insbesondere für große Reifen, wie beispielsweise OTR-Reifen, wird dadurch eine schnelle Markierung auf beiden Seiten des Reifens ermöglicht. Es ist bevorzugt, dass mittels der Messeinrichtung die obere Seitenwand und/oder die untere Seitenwand dreidimensional erfasst werden, wobei vorzugsweise die Messeinrichtung und/oder die Lasereinrichtung derart geschwenkt werden, dass der Messbereich und/oder das Markierfeld im Wesentlichen senkrecht zu der Lasereinrichtung angeordnet sind.

Dies gelingt über die Schwenkbarkeit der Messeinrichtung und/oder der Lasereinrichtung. Da die Messeinrichtung die Seitenwand dreidimensional erfasst, können der Messbereich oder zumindest Abschnitte des Messbereiches senkrecht zu der Hauptachse der Messeinrichtung angeordnet werden. Dadurch können Verzerrungen in der Abbildung des Messbereiches vermieden werden.

Auch die Anordnung der Hauptachse der Lasereinrichtung senkrecht zu dem Markierfeld durch Schwenken der Lasereinrichtung hat den Vorteil, dass Verzerrungen in der Laserung in der Seitenwand verringert werden können, welche durch die nicht senkrechte Anordnung der Lasereinrichtung gegenüber dem Markierfeld und/oder Markierfeld entstehen können.

Eine Hauptachse der Messeinrichtung und der Lasereinrichtung ist als diejenige Achse zu verstehen, die durch die Optik der Messeinrichtung beziehungsweise der Lasereinrichtung definiert wird. Beispielsweise ist die Hauptachse der Optik diejenige Achse, die mittig durch die Optiken verläuft und bei denen senkrecht darauf einfallende Lichtstrahlen keine Brechung erfahren. Ferner kann die Hauptachse diejenige sein, die zentral in dem Messbereich oder in dem Markierfeld liegt.

Die Reifenkontur wird zweckmäßigerweise während des Beladevorgangs erfasst. Dazu wird beim Beladen über einen Punktsensor die Reifenkontur ermittelt. Der Sensor liefert die Höhewerte, und etwa ein Förderband ist mit einem Encoder ausgestattet, so dass über die beiden Werte die Kontur der Reifenoberseite ermittelt werden kann.

Da Reifen in der Regel symmetrisch sind, kann durch Spiegeln ein Reifenschnitt errechnet werden, um die Lasereinrichtung mit der Messeinrichtung relativ zum Reifen ausreichend genau zu positionieren. Diese Kontur kann auch zur Positionierung der Hebevorrichtung und zum Spreizen verwendet werden.

In einer bevorzugten Ausgestaltung der Erfindung wird der Reifen über die Wülste geklammert (ergriffen), angehoben und gedreht. Hierfür kann die Haltevorrichtung verwendet werden.

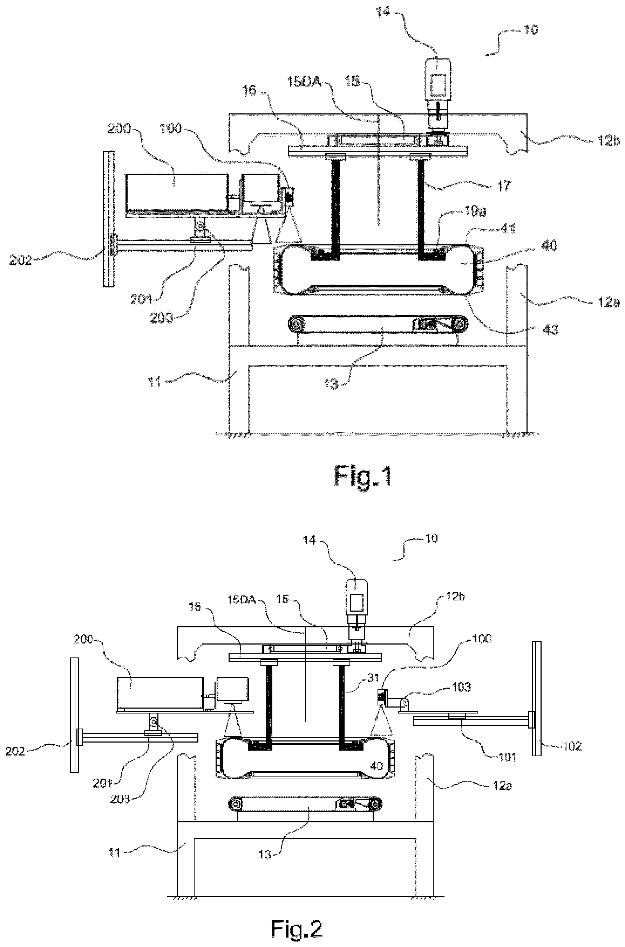

Die Lasereinrichtung und die Messeinrichtung werden zum Erfassen und Markieren der Seitenwand radial, axial und /oder geschwenkt zur Reifenoberfläche positioniert, wie es insbesondere in Fig.1 dargestellt ist.

Die Lasereinrichtung und die Messeinrichtung sind dabei optional auf einer gemeinsamen Lineareinheit platziert, und die zwei Schritte, nämlich Erfassen oder Scannen einerseits und Lasern andererseits, werden nacheinander abgearbeitet. Alternativ können die Lasereinrichtung und die Messeinrichtung auf separaten Lineareinheiten angeordnet werden, um ein unabhängiges und damit vergleichsweise schnelles Vorpositionieren der jeweiligen Einheit zu realisieren. Eine derartige Ausgestaltung ist in Fig. 2 gezeigt.

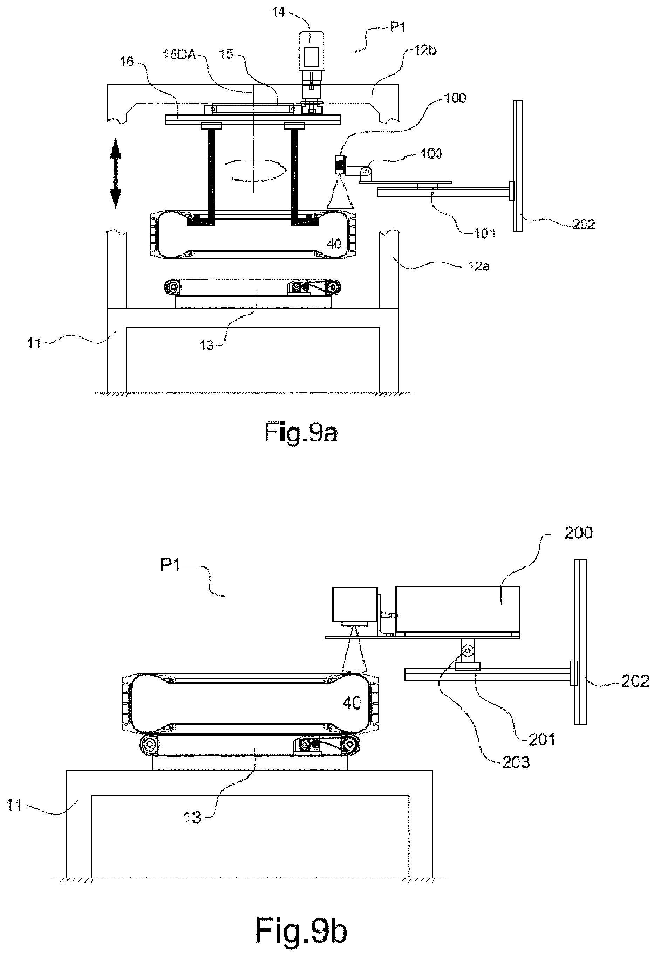

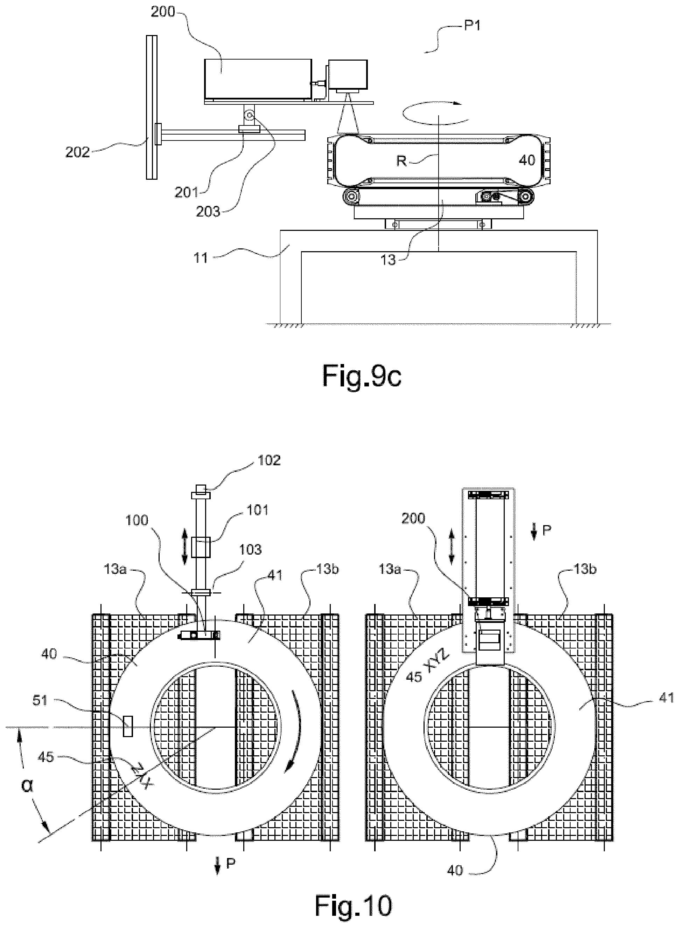

Optional werden die zu markierenden Reifen entlang einer Prozessrichtung, die auch als Beförderungsrichtung bezeichnet werden kann, durch die Vorrichtung gefördert. Die Prozessrichtung folgt dem Aufbau der Vorrichtung und kann über den gesamten Verlauf geradlinig oder veränderlich sein. Dabei können gemäß einer Ausführungsform die Messeinrichtung an einer ersten Position und die Lasereinrichtung an einer zweiten Position angeordnet sein, die der ersten Position in der Prozessrichtung nachgelagert ist (zweigeteilter Aufbau). Ein solcher Aufbau ist den Fig. 9a bis 9c und 10 zu entnehmen.

Der Reifen kann zunächst an der ersten Position erfasst werden, während er, insbesondere durch die Haltevorrichtung, gedreht wird. Im Anschluss hieran wird er abgelegt und beispielsweise mittels eines Transportbands in die zweite Position gefördert oder direkt durch die Haltevorrichtung in der zweiten Position abgelegt. Das Ablegen erfolgt dabei vorzugsweise so, dass die zu markierende Stelle des Reifens für die Lasereinrichtung zugänglich ist. Dafür wird der Reifen vorzugsweise insbesondere so in Umfangsrichtung ausgerichtet, dass sich die zu markierende Stelle an der Seite befindet, an der die Lasereinrichtung angeordnet ist. Es ist besonders zweckmäßig, wenn der Reifen an der zweiten Position um seine Achse drehbar gelagert ist, beispielsweise mittels einer drehbaren Unterlage oder eines Transportbands oder einer weiteren Haltevorrichtung. Dabei ist es möglich, den Reifen an mehreren Stellen entlang seiner Seitenwand zu markieren.

Bei einem solchen zweigeteilten Aufbau ergibt sich ein vergleichsweise großer Durchsatz von Reifen, die mit der Vorrichtung markiert werden können, da bereits der nachfolgende Reifen in der ersten Position erfasst werden kann, während der vorhergehende Reifen in der zweiten Position markiert wird.

Alternativ zum zweigeteilten Aufbau können Messeinrichtung und Lasereinrichtung an einer gemeinsamen Position in der Prozessrichtung angeordnet sein, sodass der zu markierende Reifen nicht von der Messeinrichtung zur Lasereinrichtung gefördert werden muss. Vielmehr finden das Erfassen und das Markieren des Reifens in diesem Fall an der gemeinsamen Position statt, wodurch eine kompakte Ausgestaltung sichergestellt ist.

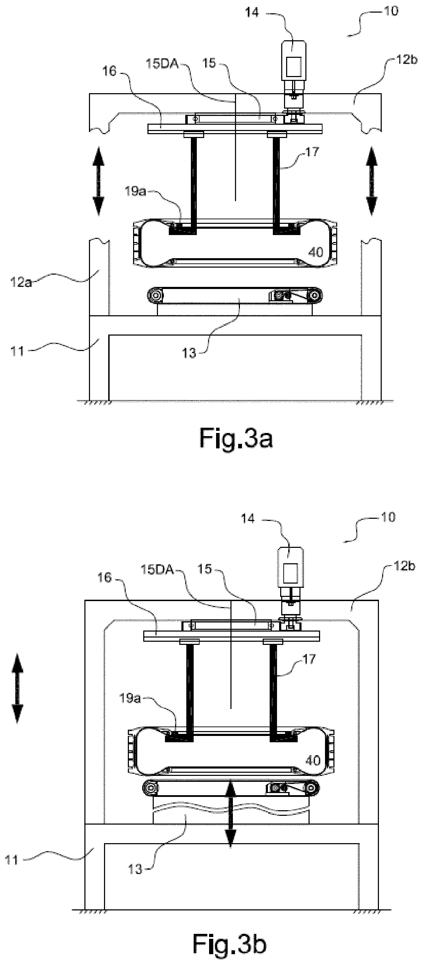

Zum Drehen des Reifens wird die Haltevorrichtung zusammen mit dem Reifen angehoben. Dies ist in Fig. 3a gezeigt. Alternativ wird das Transportband abgesenkt, wie es in Fig. 3b gezeigt ist.

Beim Ergreifen oder Klammern des Reifens wird dieser auch zentriert, damit der Reifen während der Drehung in dem in der Praxis limitierten Scan- und Markierfeld bleibt. Bei vergleichsweise breiten Reifen, wie insbesondere OTR-Reifen, kann die Seitenwand auch in mehreren Durchläufen gescannt werden. Zwischen den Durchläufen wird entsprechend neu positioniert, um den gesamten Bereich zu erfassen.

Beim Lasern kann auch in mehreren Umläufen markiert werden oder aber die entsprechenden Positionen direkt angefahren werden.

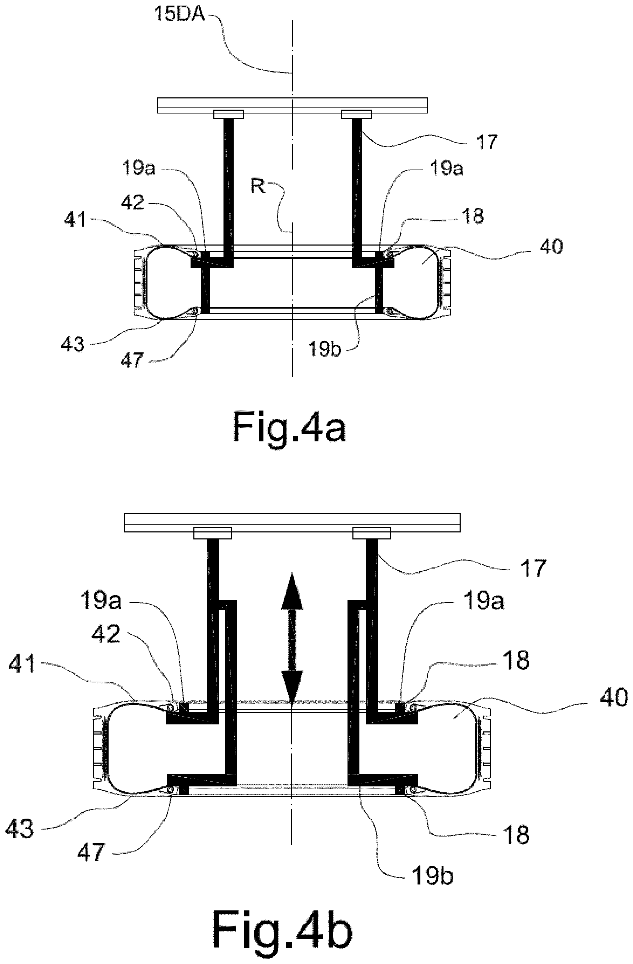

Vorteilhafterweise wird die untere Seitenwand fixiert, bevorzugt durch untere Reifenaufnahmen, damit sich die Seitenwand nicht bewegen kann. Die untere Reifenaufnahme kann beispielsweise eine Verlängerung der Reifenaufnahme für die obere Seitenwand, also der oberen Reifenaufnahme, sein, sodass diese nach unten, also zu der unteren Seitenwand hin, verlängert ist. Eine Bewegung der Seitenwand würde insbesondere beim Scannen/Digitalisieren der 3-D Kontur zu einer "Unschärfe" führen. Eine derartige Ausgestaltung ist in Fig. 4a gezeigt.

Vorteilhafterweise wird der Reifen gespreizt, damit die Seitenwände möglichst parallel zur Markierebene stehen, wie es in Fig. 4b gezeigt ist.

Zweckmäßigerweise sind die Lasereinrichtung und die Messeinrichtung auf ein und derselben Seite des Reifens angeordnet. Diese einseitige Anordnung ermöglicht eine einseitige Markierung, wie es in Fig. 1a gezeigt ist.

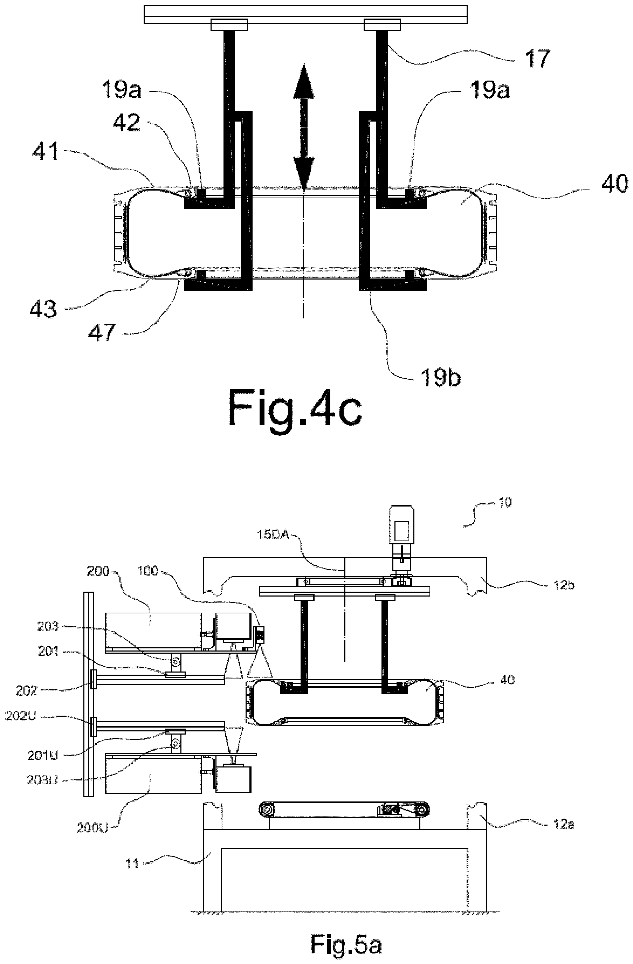

Bevorzugt ist jedoch eine Lasereinrichtung auf beiden Seiten des Reifens angeordnet, um insbesondere zeitgleich eine beidseitige Markierung zu ermöglichen, wie es in Fig. 5a gezeigt ist. Die Messeinrichtung kann in diesem Fall jedoch nur auf einer Seite des Reifens angeordnet sein, da eine einseitige Erkennung von Merkmalen des Reifens häufig aufgrund der Symmetrie, die Reifen optional haben, ausreichend ist.

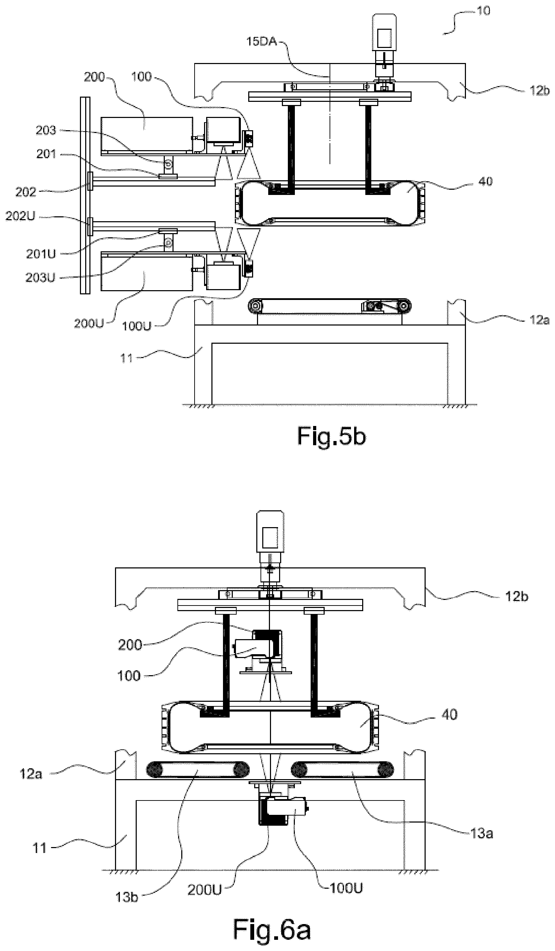

Weiter sind jedoch bevorzugt sowohl die Lasereinrichtung als auch die Messeinrichtung auf beiden Seiten des Reifens angeordnet, so dass eine beidseitige Markierung und eine unabhängige Erkennung von Merkmalen zur Positionierung auf beiden Seiten des Reifens sichergestellt ist, wie es in Fig. 5b gezeigt ist.

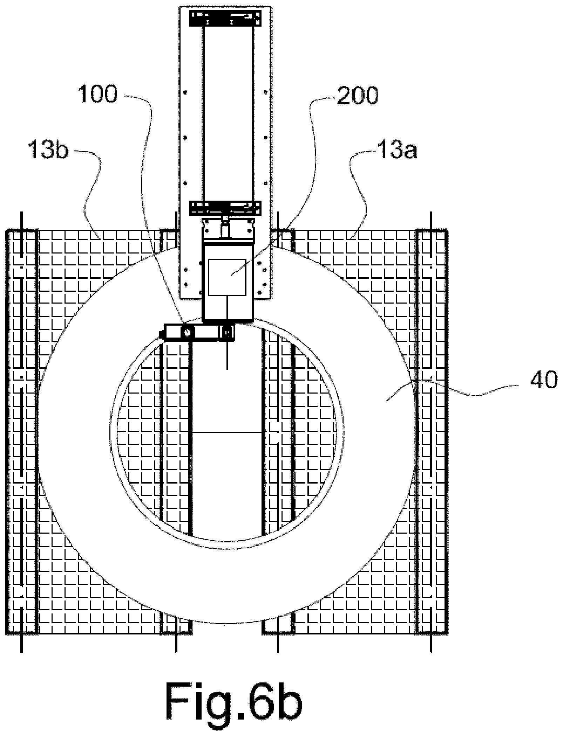

Vorteilhafterweise ist ein zweigeteiltes Transportband vorgesehen, um den Verfahrweg von Reifen beziehungsweise den des Transportbandes insbesondere bei zweiseitiger Markierung zu reduzieren. Eine derartige Ausgestaltung ist in den Fig. 6a und 6b gezeigt. Ferner ist es möglich, in einem Spalt zwischen den beiden Transportbänder eine zweite Messeinrichtung und/oder Lasereinrichtung vorzusehen, welche den Reifen vorzugsweise zeitglich mit der ersten Messeinrichtung und/oder Lasereinrichtung markiert. Damit ist ein Wenden des Reifens zur Markierung der oberen und unteren Seitenwand nicht notwendig. Die vorzugsweise zeitgleiche Markierung ermöglicht darüber hinaus eine Zeitersparnis für ein schnelleres Markierverfahren.

Bevorzugt wird die Kontur des Reifens erfasst und/oder berechnet, um die Lasereinrichtung und/oder die Messeinrichtung in Bezug auf die Oberfläche des Reifens vorpositionieren zu können; wobei vorzugsweise die Kontur des Reifens beim Beladen der Vorrichtung mit dem Reifen zumindest teilweise erfasst wird.

Vorzugsweise wird die Lasereinrichtung mit Hilfe der sehr viel genaueren Position aus der Ermittlung des spezifischen Merkmals relativ zur Reifenoberfläche gemäß Verfahrensschritt b) positioniert, um eine präzise Markierung sicherzustellen.

Einzelheiten und weitere Vorteile der Erfindung ergeben sich aus der nachfolgenden Beschreibung von bevorzugten Ausführungsbeispielen. In den die Ausführungsbeispiele lediglich schematisch darstellenden Zeichnungen veranschaulichen im Einzelnen:
- Fig. 1: eine Seitenansicht einer Vorrichtung zum Markieren von Reifen, die einen zu markierenden Reifen im Querschnitt zeigt, in einer ersten Ausführungsform;
- Fig. 2: eine Seitenansicht einer Vorrichtung zum Markieren von Reifen, die einen zu markierenden Reifen im Querschnitt zeigt, in einer zweiten Ausführungsform;
- Fig. 3a: eine Seitenansicht einer Vorrichtung, die einen zu markierenden Reifen im Querschnitt zeigt und das Anheben einer Haltevorrichtung für den Reifen veranschaulicht;
- Fig. 3b: eine Seitenansicht einer Vorrichtung, die einen zu markierenden Reifen im Querschnitt zeigt und das Absenken eines Transportbands für den Reifen veranschaulicht;
- Fig. 4a: eine Seitenansicht einer Vorrichtung zum Markieren von Reifen, die einen zu markierenden Reifen im Querschnitt zeigt, in einer dritten Ausführungsform;
- Fig. 4b: eine Seitenansicht einer Vorrichtung zum Markieren von Reifen, die einen zu markierenden Reifen im Querschnitt zeigt, in einer vierten Ausführungsform;
- Fig. 4c: eine Seitenansicht einer Vorrichtung zum Markieren von Reifen, die einen zu markierenden Reifen im Querschnitt zeigt, in einer fünften Ausführungsform;
- Fig. 5a: eine Seitenansicht einer Vorrichtung zum Markieren von Reifen, die einen zu markierenden Reifen im Querschnitt zeigt, in einer sechsten Ausführungsform;
- Fig. 5b: eine Seitenansicht einer Vorrichtung zum Markieren von Reifen, die einen zu markierenden Reifen im Querschnitt zeigt, in einer siebten Ausführungsform;
- Fig. 6a: eine Seitenansicht einer Vorrichtung zum Markieren von Reifen, die einen zu markierenden Reifen und ein zweigeteiltes Transportband im Querschnitt zeigt, in einer achten Ausführungsform;
- Fig. 6b: eine Draufsicht auf die Ausführungsform gemäß Fig. 6a;
- Fig. 7: eine Seitenansicht einer Vorrichtung zum Markieren von Reifen, die einen zu markierenden Reifen im Querschnitt zeigt, in einer neunten Ausführungsform;
- Fig. 8: eine Seitenansicht einer Vorrichtung zum Markieren von Reifen, die einen zu markierenden Reifen im Querschnitt zeigt, in einer zehnten Ausführungsform;
- Fig. 9a: eine Seitenansicht einer Vorrichtung zum Markieren von Reifen, die einen zu markierenden Reifen im Querschnitt an einer ersten Position zeigt, in einer zehnten Ausführungsform;
- Fig. 9b: eine Seitenansicht von der Vorrichtung gemäß Fig. 9a in einer Variante, die einen zu markierenden Reifen im Querschnitt in einer zweiten Position zeigt;
- Fig. 9c: eine Seitenansicht von der Vorrichtung gemäß Fig. 9a in einer weiteren Variante, die einen zu markierenden Reifen im Querschnitt in einer zweiten Position zeigt;
- Fig. 10: eine Draufsicht auf die erste Position und eine Draufsicht auf die zweite Position einer Vorrichtung zum Markieren von Reifen in einer elften Ausführungsform;
- Fig. 11a: eine Seitenansicht auf einen Querschnitt eines Reifens mit einer Messeinrichtung und einer Lasereinrichtung gemäß einer weiteren Ausführungsform;
- Fig. 11b: eine Seitenansicht auf einen Querschnitt eines Reifens mit einer Messeinrichtung und einer Lasereinrichtung gemäß einer weiteren Ausführungsform;
- Fig. 12: eine Draufsicht auf einen Reifen mit darüber angeordneter Messeinrichtung und Lasereinrichtung gemäß einer weiteren Ausführungsform;
- Fig. 13: eine Darstellung einer erfassten Abbildung eines Prototyps eines Reifens/ Referenzdatensatz mit idealer Positionierung in einer Haltevorrichtung;
- Fig. 14: eine Überlagerung von Darstellungen einer erfassten Abbildung eines zu markierenden Reifens in der Haltevorrichtung mit der Darstellung von Fig. 13;
- Fig. 15: die Darstellung von Fig. 14 mit ergänzenden Definitionen;
- Fig. 16: ein beispielhafter exemplarischer Ausschnitt von Fig. 15 zur besseren Darstellung der in Fig. 15 angegebenen Definitionen;
- Fig. 17: ein Ablaufschema der erfindungsgemäßen Verfahrensschritte;
- Fig. 18: ein Prinzipschaltbild einer weiteren Ausführungsform der Markiervorrichtung;
- Fig. 19: einen Referenzdatensatz von einem Masterreifen mit einem Merkmal;
- Fig. 20: einen Ist-Datensatz des Masterreifens gemäß Fig. 19;
- Fig. 21: einen Referenzdatensatz von einem Masterreifen mit zwei Merkmalen und
- Fig. 22: einen Ist-Datensatz des Masterreifens gemäß Fig. 21.

Die in den Figuren gezeigten Ausführungsbeispiele der Vorrichtung haben vorzugsweise gemein, dass mit ihnen ein zu markierender Reifen 40 an wenigstens einem seiner Wülste 42, 47 aufgenommen und gehalten werden kann, sodass ein aufwändiges Wenden des Reifens 40 entbehrlich wird. Somit wird eine schnelle und zuverlässige Kennzeichnung des Reifens 40 sichergestellt.

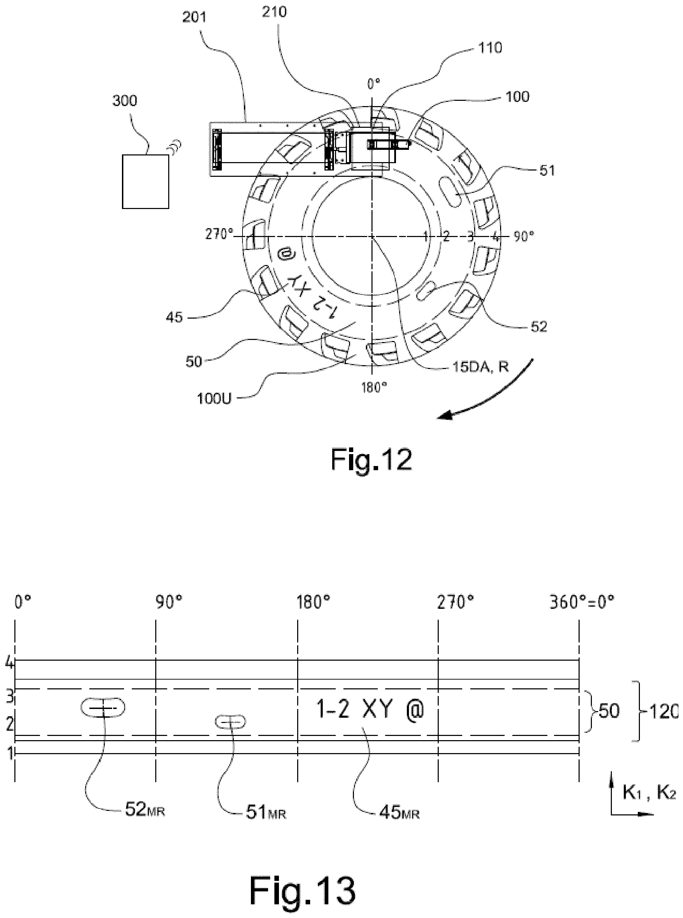

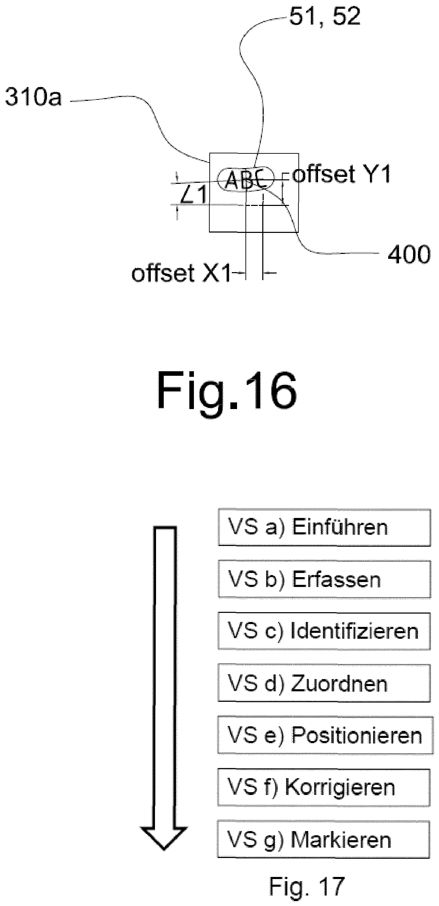

Wie die Fig. 1 bis 18 zu erkennen geben, werden die individuellen Markierungen oder Kennzeichnungen der Reifen 40 durch ein sogenanntes "Laserengraving" am neu hergestellten oder am runderneuerten Reifen 40 angebracht. Dieser Prozess erfolgt vorzugsweise vollautomatisch.

Die Vorrichtung umfasst optional ein Maschinenuntergestell 11, auf dem ein Maschinenaufbau, bestehend aus einer festen Basis 12a und einem beweglichen Oberteil 12b, sowie eine Fördereinrichtung 13 befestigt sind. Die Fördereinrichtung 13 ist zweckmäßigerweise als Transportband ausgebildet. Die Fördereinrichtung 13 kann optional aus zwei Teilen 13a, 13b bestehen, wie in Fig. 6a, 6b und 10 dargestellt.

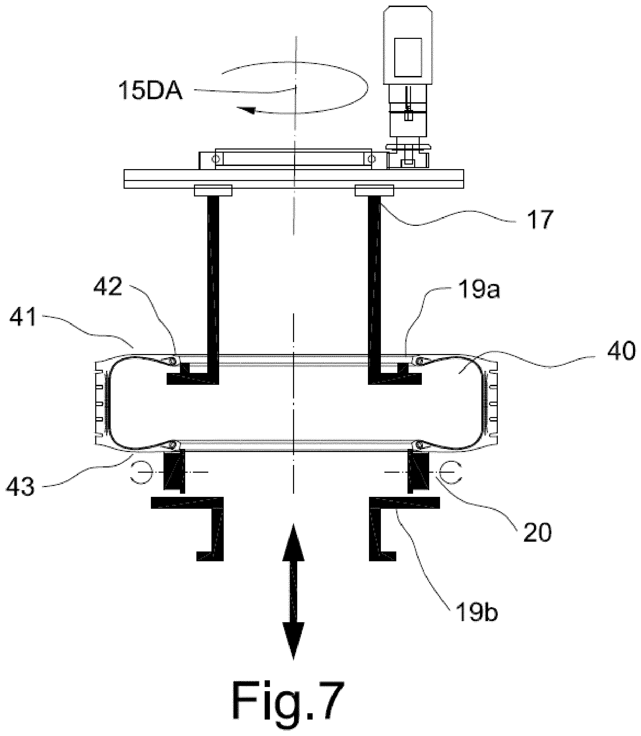

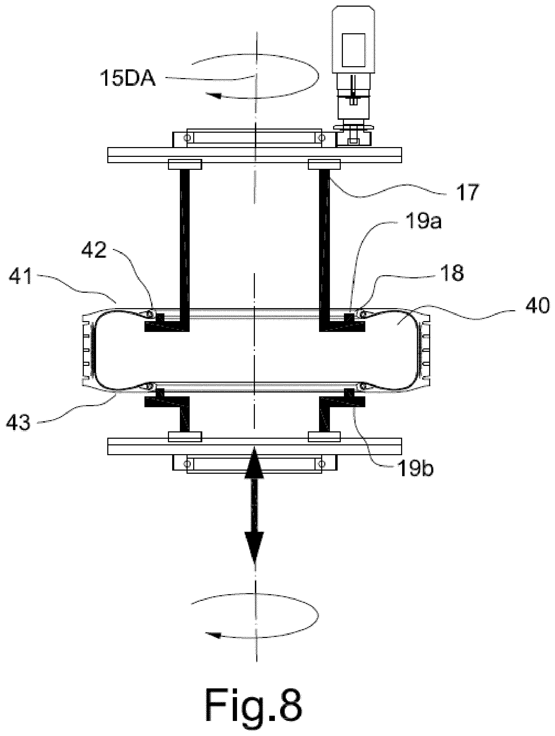

Des Weiteren umfasst die Vorrichtung eine Haltevorrichtung 17 zur Aufnahme und zum Halten des zu markierenden Reifens 40 an einem ersten Wulst 42 und/oder an einem zweiten Wulst 47. Die Haltevorrichtung 17 weist in den gezeigten Ausführungsbeispielen eine obere Reifenaufnahme 19a auf, welche an dem ersten Wulst 42 angreift und den Reifen 40 auf diese Weise hält. Optional weist die Haltevorrichtung 17 eine untere Reifenaufnahme 19b zum Fixieren des Reifens 40 auf, die beispielweise in Fig. 4a bis 4c gezeigt ist. Die untere Reifenaufnahme 19b kann, wie in Fig. 4a gezeigt, eine Verlängerung der oberen Reifenaufnahme 19a für den ersten Wulst 42 sein, sodass diese nach unten, also zu dem zweiten Wulst 47 hin, verlängert ist. Die untere Reifenaufnahme 19b kann entweder nur an den Innenseiten des Reifens 40 anliegen, ohne diesen zu stützen (Fig. 4a, 4b), oder sie kann eine Auflagefläche für den zweiten Wulst 47 ausbilden (Fig. 4c), auf welcher der Reifen 40 mit dem zweiten Wulst 47 aufliegt und sich abstützt. Sofern die untere Reifenaufnahme 19b, wie in Fig. 7 und 8 gezeigt, nicht als Verlängerung der oberen Reifenaufnahme 19a ausgebildet ist, ist dafür Sorge zu tragen, dass sich beim Drehen des Reifens 40 um die Rollachse R mittels der oberen Reifenaufnahme 19a auch die untere Seitenwand 43 mit dreht. Zu diesem Zweck kann entweder, wie in Fig. 7 gezeigt, eine Abrolleinheit 20, beispielsweise drehbar gelagerte Rollen, zwischen der unteren Seitenwand 43 und der unteren Reifenaufnahme 19b vorhanden sein, oder die untere Reifenaufnahme 19a kann, wie in Fig. 8 angedeutet, zum Erzeugen einer Drehung angetrieben werden, vorzugsweise synchron zu der oberen Reifenaufnahme 19a. An der oberen Reifenaufnahme 19a und an der unteren Reifenaufnahme 19b können Zentrierungsanschläge 18 vorhanden sein, um den Reifen 40 radial zu zentrieren, wie beispielsweise in Fig. 4a, 4b gezeigt.

Zum Bewegen der Haltevorrichtung 17 und des von dieser gehaltenen Reifens 40 ist, wie insbesondere in Fig. 1 bis 3b gezeigt, eine radiale Verschiebeeinrichtung 16 und eine mit einem Drehantrieb 14 versehene Drehvorrichtung 15 vorhanden.

In einer bevorzugten, in den Zeichnungen nicht dargestellten Ausführungsform ist die Haltevorrichtung 17 ausgestaltet, die erste Seitenwand 41 und die zweite Seitenwand 43 eines zu markierenden Reifens 40 frei im Raum schwebend zu halten, und zwar derart dass die Außenseite wenigstens einer der Seitenwände 41, 43 für die Markierung durch eine Lasereinrichtung 200 frei zugänglich ist. Die Haltevorrichtung 17 weist eine in radialer Richtung des Reifens 40 verfahrbare Reifenaufnahme 19a, 19b zur Aufnahme des zu markierenden Reifens 40 an dem ersten Wulst 42 und/oder an dem zweiten Wulst 47 auf. Weiterhin weist die Reifenaufnahme 19a, 19b ein schwenkbar ausgestaltetes Greifelement auf, das beim Kontaktieren des Wulstes 42, 47 von einer Ausgangstellung in eine Endstellung bewegt wird, um den Reifen 40 zu zentrieren. Die Haltevorrichtung 17 weist ferner einen Sensor auf, der die Bewegung des Greifelements erfasst und ein Signal für eine Steuereinrichtung 300 generiert, wenn der Reifen 40 zentriert ist. Die Haltevorrichtung 17 ist vorteilhafterweise mit einem Federelement versehen, das ausgestaltet ist, der Bewegung des Greifelements von der Ausgangstellung in die Endstellung entgegenzuwirken.

In einer ferner bevorzugten Ausgestaltung, die ebenfalls nicht in den Zeichnungen dargestellt ist, weist die Haltevorrichtung 17 eine um eine Drehachse (15_{DA}) drehbar ausgestalte Reifenaufnahme 19a, 19b auf, die wenigstens drei, vorzugsweise vier oder mehr, Greifarme umfasst. Die in radialer Richtung des Reifens 40 verfahrbaren Greifarme sind zweckmäßigerweise jeweils mit einem Greifelement versehen.

Die Vorrichtung weist optional eine Lasereinrichtung 200 und eine Messeinrichtung 100 auf. Wie insbesondere in Fig. 5a und 5b gezeigt, kann eine zweite, untere Lasereinrichtung 200U vorhanden sein, um je eine Lasereinrichtung 200, 200U auf beiden Seiten des Reifens 40 zu haben, sodass eine beidseitige, zeitgleiche Markierung des Reifens 40 möglich ist.

Die Lasereinrichtungen 200, 200U können jeweils beweglich angeordnet sein, um präzise auf den zu markierenden Bereich (Markierfeld) 51, 52 des Reifens 40 ausgerichtet zu werden, nämlich jeweils mittels einer radialen Verschiebeeinrichtung 201, 201U, einer axialen Verschiebeeinrichtung 202, 202U und einer Schwenkeinrichtung 203, 203U. In ähnlicher Weise kann die Messeinrichtung 100 mittels einer radialen Verschiebeeinrichtung 101, einer axialen Verschiebeeinrichtung 102 und einer Schwenkeinrichtung 103 beweglich angeordnet sein.

Die Messeinrichtung 100 und die Lasereinrichtung 200 können, wie die in Fig. 1 bis Fig. 8 gezeigten Ausführungsformen zeigen, an einer gemeinsamen Position in einer Prozessrichtung P, die auch als Förderrichtung bezeichnet werden kann, angeordnet sein. Der zu markierende Reifen 40 verbleibt in diesem Fall an derselben Position entlang der Prozessrichtung P, während er erfasst und markiert wird. Die Prozessrichtung P folgt dem konstruktiven Aufbau der Vorrichtung und kann über den gesamten Verlauf geradlinig oder auch veränderlich sein.

Alternativ dazu kann die Vorrichtung einen zweigeteilten Aufbau aufweisen, wie die Fig. 9a bis 9c, 10 und 11a, 11b zeigen. Der zweigeteilte Aufbau sieht vor, dass die Messeinrichtung 100 an einer ersten Position P1 angeordnet ist und die Lasereinrichtung 200 an einer zweiten Position P2 angeordnet ist. Die zweite Position P2 ist der ersten Position P1 in der Prozessrichtung P nachgelagert, das heißt mit anderen Worten, dass ein zu markierender Reifen 40, der die Vorrichtung durchläuft, zunächst an der ersten Position P1 und danach an der zweiten Position P2 ankommt.

Der Reifen 40 wird zunächst in der ersten Position P1 erfasst und zu diesem Zweck von der Haltevorrichtung 17 gedreht. Anschließend wird der Reifen 40 abgelegt und mittels der Fördereinrichtung 13, vorzugsweise einem Transportband, zu der zweiten Position P2 gefördert. Wie in den Fig. 9c und 10 gezeigt, kann der Reifen 40 an der zweiten Position P2 um seine Rollachse R drehbar angeordnet sein, beispielsweise mittels einer drehbaren Unterlage oder eines drehbaren Transportbands 13. Die Drehbarkeit des Reifens 40 ermöglicht es, dass der Reifen 40 in der zweiten Position P2 an mehreren Stellen entlang seiner Seitenwand 41 markiert wird, indem der Reifen 40 jeweils so gedreht wird, dass die Markierfelde 51, 52 auf dem Reifen 40 nacheinander in einem Arbeitsfeld 210 der Lasereinrichtung 200 positioniert werden.

Alternativ zur Drehbarkeit des Reifens 40 kann der Reifen 40 so an der zweiten Position P2 abgelegt werden, dass die gegebenenfalls einzige zu markierende Stelle 51 des Reifens 40 für die Lasereinrichtung 200 zugänglich ist. Dafür wird der Reifen 40 so in Umfangsrichtung ausgerichtet, dass sich die zu markierende Stelle 51, 52 nach dem Ablegen an der Seite ist, an der sich die Lasereinrichtung 200 befindet.

Der zweigeteilte Aufbau hat den Vorteil, dass der zu markierende Reifen 40 nach dem Erfassen oder Scannen von der ersten Position P1 zur zweiten Position P2 gefördert wird. Während er dort markiert wird, ist die erste Position P1 für den nachfolgenden Reifen 40 frei, sodass die beiden Prozessschritte Erfassen und Markieren für nachfolgende Reifen 40 parallel durchgeführt werden können.

Das hier beschriebene Verfahren wird bevorzugt mit Hilfe der hier offenbarten Vorrichtung durchgeführt.

Die Reifendaten können zusammen mit dem zu markierenden Reifen 40 übergeben werden. Die Lage der beispielsweise in der Fig. 10 ersichtlichen Markierfelder 51, 52 relativ zu einem definierten, spezifischen Merkmal 45 ist in einer Datenbank hinterlegt. Die Merkmale 45 werden optional in einem manuellen Schritt eingelesen und reifenspezifisch, das heißt insbesondere von der Reifenform abhängig, in der Datenbank abgelegt. Die Zuordnung der spezifischen Markierung erfolgt insbesondere mittels eines optoelektronisch lesbaren Codes, etwa ein Barcode oder ein Matrixcode, oder, falls kein Code vorhanden ist, durch eine manuelle Auswahl des Settings für den jeweiligen Reifen 40, welchem eine Identifikationsnummer zugeordnet ist.

Eine automatische Erkennung des spezifischen Merkmals 45, wie beispielsweise ein Logo, auf dem Reifen 40 dient zur Positionierung der Lasereinrichtung 200 über dem oder den gewünschten Ist-Markierfeldern 51, 52. Die Merkmale 45 auf der Seitenwand 41, 43 fußen auf einer reifenspezifischen Kennzeichnung, Logos usw. (Merkmale) und bewirken eine eindeutige Lage der Markierungen 400 relativ zu den Merkmalen 45, beispielsweise um einen Winkel α und/oder Radius r. Die Geometrie / Koordinaten sind in der Regel bekannt, etwa aus der Zeichnung der Reifenform, einer sogenannten Konstruktionszeichnung. Ein Reifen 40 lässt sich im Allgemeinen stets einer spezifischen Reifenform zuordnen.

Die Anforderungen an eine korrekte Markierung 400 sind so, dass, selbst dann, wenn die Positionierung des Reifens 40 nur +/- 2 cm (beide Richtungen) genau erfolgt und/oder der Reifen 40 nicht 100 % rotationssymmetrisch beziehungsweise das Markierfeld 51, 52 nicht rotationssymmetrisch zur Reifengeometrie ist, die Markierung 400 zentrisch in einem Markierfeld 51, 52 sein muss. Um diese Anforderungen zu erfüllen, sieht das hier offenbarte Verfahren Folgendes vor:
Nach dem Positionieren einer Markiereinheit oder Lasereinrichtung 200, 200U über dem Markierfeld 51, 52 wird das Markierfeld 51, 52 nochmals erfasst, und die tatsächliche Lage wird ermittelt. So erfolgt eine symmetrische Ausrichtung des Arbeitsfelds 210 zur Ist-Position des Markierfelds 51, 52.

Zu diesem Zweck ist das Arbeitsfeld 210 der Lasereinrichtung 200, 200U entsprechend größer als die maximale Feldgröße (Markierfeld). Eine Korrektur wird mittels der zugehörigen Software auf einer Steuereinrichtung durchgeführt.

Ein definiertes Markierfeld 51, 52 verlangt das Wissen um die tatsächliche Position des Markierfelds 51, 52. Diese kann jedoch zur "Vorlage", einem sogenannten Masterreifen 40_{MR}, variieren, etwa aufgrund der Positioniergenauigkeit der verwendeten Fördertechnik oder einer Abweichung der Reifenform von der Vorlage. Um die Anforderung zu erfüllen, dass die Markierung 400 nur geringe Abweichungen aufweist, beispielsweise +/- 1 mm zentrisch im Markierfeld 51, 52 liegt, wird eine zweite Messung oder Auswertung der ersten Messung zur tatsächlichen Definition der Markierposition im Markierfeld 51, 52 durchgeführt.

Ein weiteres Verfahren zum Markieren eines Reifens 40 wird im Folgenden beschrieben. Das Verfahren kann mit der oben beschriebenen Markiervorrichtung 10 durchgeführt werden, sofern im Folgenden keine Abweichungen und/oder Ergänzungen genannt werden.

Der Aufbau umfasst eine Lasereinrichtung 200, die zumindest radial bewegt werden kann und einen Reifen 40, der zumindest drehbar gelagert ist. Ersatzweise kann auch die Lasereinrichtung 200 um die Reifenachse (Rollachse) R gedreht werden.

Die Vorrichtung umfasst die Lasereinrichtung 200 mit einem Laser, mittels welchem die Markierung 400 in den Reifen 40 eingebracht werden kann, und eine Messeinrichtung 100, welche auch als Scaneinrichtung bezeichnet werden kann. Die beiden Einrichtungen sind mechanisch gekoppelt und haben ein gemeinsames Koordinatensystem K₁, K₂ (die jeweiligen Koordinatensysteme sind zueinander eingemessen). Dies bedeutet, dass die Position der Lasereinrichtung 200 gegenüber der Messeinrichtung 100 fixiert ist. Die Lasereinrichtung 200 und/oder die Messeinrichtung 100 weisen optional Optiken auf, mittels welchen ein Laser- und/oder Scanstrahl (Messlinie 110) über den Reifen 40 geführt werden. Der durch die Messlinie 110 geführte Bereich des Reifens stellt ein Arbeitsfeld 210 dar. Es ist dabei zu beachten, dass das Arbeitsfeld 210, welcher auch als Scanbereich bezeichnet werden kann, größer ist als ein Markierkorridor 50, der einen Bereich des Reifens 40 darstellt, in dem das spezifische Merkmal 45 und das Markierfeld 51, 52 des zu markierenden Reifens 40 angeordnet sind.

Zur Erstellung einer Referenzaufnahme, wird ein Masterreifen 40_{MR} mit der Messeinrichtung 100 gescannt. Der Masterreifen 40_{MR} stellt ein Prototyp des zu markierenden Reifens 40 dar und umfasst ein spezifische Merkmal 45_{MR} und einen Markierfeld 51_{MR}, 52_{MR}.

Ein Arbeitsfeld 210, welcher den Bereich darstellt, in welchem die Lasereinrichtung 200 die Markierung aufbringen kann, ist optional in radialer Richtung etwa so groß wie der Messbereich 120, kann aber auch kleiner sein. Dann wird die Lasereinrichtung 200 zusätzlich entsprechend mechanisch in radialer Richtung positioniert, um zu erreichen, dass das Markierfeld 51, 52 in dem Arbeitsfeld 210 liegt. Das heißt, die Lasereinrichtung 200 kann in seiner aktuellen Position die Markierung 400 an der gewünschten Stelle aufbringen.

Mit dem Scannen und/oder Einmessen des Master- oder Referenzreifen 40_{MR} (Prototyp des zu markierenden Reifens), ist die Soll-Position des Markierfelds 51_{MR} und 52_{MR} (1, 1+n,) relativ zum spezifischen Merkmal 45_{MR} bekannt.

Das spezifische Merkmal 45 für den jeweiligen Reifen 40 sollte möglichst identisch zum Masterreifen 40_{MR} (Prototyp des zu markierenden Reifens) sein, um in der Anwendung eine schnelle und sichere Erfassung zu gewährleisten. Weicht das spezifische Merkmal 45 des zu markierenden Reifens 40 von dem spezifischen Merkmal 45_{MR} des Prototyps des zu markierenden Reifens 40 ab, steigt der Rechenbedarf zur Erkennung oder es wird gegebenenfalls nicht erkannt und der Reifen 40 muss ohne Markierung 400 durchgeschleust werden.

Der zu markierende Inhalt (Markierung 400) für das jeweilige Markierfeld 51, 52 wird optional aus einer Datenbank ausgelesen. Dazu werden für den Prototyp des zu markierenden Reifens 40_{MR} die verschiedenen Markierfelder 51_{MR}, 52_{MR} über eine Identifikationsnummer (ID) zugeordnet.

Im tatsächlichen Arbeitsablauf bei der Markierung des Reifens 40 ist davon auszugehen, dass die zu markierenden Reifen 40 nicht identisch zum Prototyp des zu markierenden Reifens 40_{MR} auf der Haltevorrichtung 17 (vor-) positioniert werden können. Dies bedeutet, dass das Zentrum (Rollachse) R des zu markierenden Reifens 40 nicht auf einer Drehachse 15_{DA} der Haltevorrichtung 17 liegt. Insbesondere wenn der Ladevorgang möglichst schnell sein soll, ist von einer größeren Abweichung zu einer idealen Lage auszugehen, bei der die Drehachse 15_{DA} der Haltevorrichtung 17 mit der Rollachse R des Reifens 40 übereinstimmt.

Es ist auch möglich, dass der zu markierende Reifen 40 von dem Prototyp des Reifens 40_{MR} abweicht. Dies tritt insbesondere bei einer Runderneuerung des Reifens 40 auf, wo unterschiedliche Reifen 40 in derselben, unter Umständen auch anderen, ähnlichen Formen hergestellt werden.

Wird nun der zu markierende Reifen 40 gescannt (mittels der Messeinrichtung 200 erfasst), werden die Ist-Position (in x- und y-Richtung) und die Ist-Winkellage des spezifischen Merkmals 45 erfasst. Insbesondere stellt das spezifische Merkmal 45 ein Markierfeld 51, 52 dar, in das die Markierung 400 eingebracht werden soll. Im Anschluss daran wird die Abweichung Δ_{PD} von dem Prototyp des Reifens 40_{MR} zu dem zu markierenden Reifen 40 berechnet.

Soll die Markierung 400 aber in ein vordefiniertes Feld (Markierfeld) gelasert werden, das gegenüber der Reifenoberfläche erhaben ist oder mit einer Umrandung und/oder einer Vertiefung am zu markierenden Reifen 40 bereits vorhanden ist, wird diese Markierung 400 nicht mehr zentrisch innerhalb des Markierfelds 51, 52 sein, sondern um den Betrag des Reifenversatz oder Formabweichung versetzt sein und unter Umständen teilweise oder ganz außerhalb der Umrandung oder des vorgesehen Felds/Markierfelds 51, 52 sein.

Um diesem Umstand zu begegnen, wird deshalb der gescannte/erfasste Teilbereich des Reifens 40 oder Seitenwand 41, 43 nicht nur zur Erkennung des spezifischen Merkmals 45 verwendet, sondern auch zur Erkennung der Lageabweichung des jeweiligen Markierfelds 51, 52 am zu markierenden Reifen 40 im Vergleich zum Masterreifen 40_{MR}.

Dazu wird in einem Messbereichs 120, der vordefiniert ist oder durch die Optiken der Messeinrichtung 100 definiert ist, nach dem jeweiligen Markierfeld 51, 52 gesucht und die Abweichung der Position Δ_{PD} (oder z.B. eines Zentrum Δ_{RA}) in x- und y-Richtung und die Winkellage berechnet.

Handelt es sich um identische Markierfelder 51, 52 oder spezifische Merkmale 45 ist es notwendig, dass die Größe des Messbereichs 120 jeweils nur ein Markierfeld 51, 52 oder spezifisches Merkmal 45 umfasst, um eine eindeutige Zuordnung des jeweiligen Markierfelds 51, 52 und damit der darauf anzubringenden Markierung 400 zu gewährleisten.

Unterscheiden sich die Markierfelder 51, 52 oder das spezifische Merkmal 45, kann auch die Form und/oder Größe des Markierfelds 51, 52 zur jeweiligen Zuordnung herangezogen werden.

Die jeweilige Laserung der Markierung 400 wird dann mit dem entsprechend korrigierten Zentrum/Rollachse R und Winkellage α durchgeführt. Bei einer nachfolgenden Verifikation der Markierung 400, kann ebenfalls die tatsächliche Position und Winkellage α des Markierfelds 51, 52 berücksichtigt werden.

Die Messeinrichtung 100 hat einen durch den optischen Aufbau vorgegeben Messbereich 120, der durch einen Mindest- und einen Maximalabstand zu der zu scannenden Oberfläche begrenzt ist. Diesen Abstand a bezeichnet man als Arbeitsabstand a.

Um den relevanten Bereich der Seitenwand des Reifens 40 zu scannen, muss die Messeinrichtung 100 so positioniert werden, dass der zu scannende Bereich der Seitenwand 41, 43, also der Bereich, in dem das spezifische Merkmal 45 liegt, innerhalb dieses Messbereichs 120 liegt.

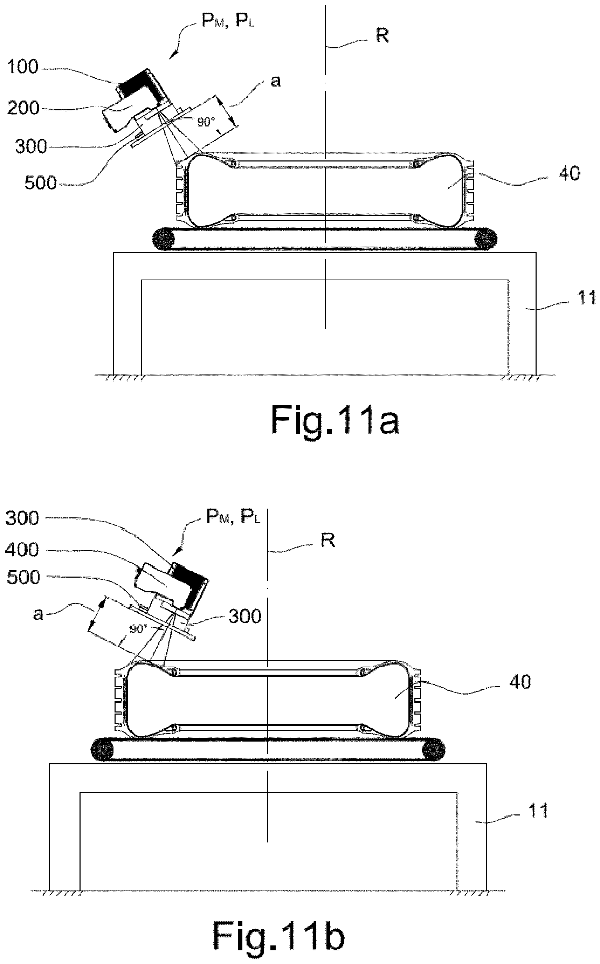

Um eine beliebige Reifengröße zu scannen, ist es deshalb von Vorteil, die Kontur des Reifens 40 und den Abstand a zu dem Reifen 40 zu erfassen, um die Messeinrichtung 100 mit dem optimalen Arbeitsabstand a senkrecht zur Reifenoberfläche zu positionieren. Eine beispielhafte Messposition P_{M} aber auch eine beispielhafte Markierposition P_{L}, die einen Abstand a zwischen der Messeinrichtung 100 und/oder Lasereinrichtung 200 und dem Reifen 40 aufweist, ist in Fig. 11a und 11b gezeigt.

Das ist insbesondere für den Bereich der Reifenschulter und den Wulstbereich wichtig, da der Reifen 40 in diesen Bereich eine zum Teil stark gekrümmte Kontur aufweist.

Die Messeinrichtung 100 und/oder die Lasereinrichtung 200 kann dazu optional entsprechend geschwenkt werden, um möglichst senkrecht zur Oberfläche zu scannen beziehungsweise zu markieren.

Die Erfassung der Ist-Kontur kann optional während des Beladevorgangs durchgeführt werden. Dazu wird ein Signal eines ausreichend genauen Abstandsensors 500 mit der Reifenposition während des Einförderns des Reifens 40 durch einen Encoder am Förderband zu einem Höhenprofil zusammengeführt.

Da ein Reifen 40 mit wenigen Ausnahmen symmetrisch aufgebaut ist, kann durch Spiegeln der oberen Kontur eine ausreichend genaue Reifenkontur für die Ober- und Unterseite erzeugt werden.

Ist die Position (in x-, y-, und z-Richtung) und die Winkellage (Winkel der Messeinrichtung 100 zu der Oberfläche der Fördereinrichtung) bekannt, wird mit dem Scannen der Reifenoberfläche ein im Wesentlichen von der Genauigkeit der Messeinrichtung 100 abhängiges dreidimensionales Modell (3-D Model) des zu markierenden Reifenbereichs 50, optional über den gesamten Umfang, erzeugt. Dazu kann der Reifen 40 in dem Messbereich 120 erfasst werden und dann in Umfangsrichtung gedreht werden. Anschließend wird wiederum die Reifenoberfläche gescannt. Dieser Vorgang wird solange wiederholt, bis die Reifenoberfläche vollständig erfasst ist. Dadurch kann ein Messbereich 120, der die gesamte Seitenwand 41, 43 des Reifens 40 umfassen kann, erfasst werden.

Das 3-D Modell dient im folgenden Schritt zur Positionierung der Lasereinrichtung 200 und zur Ausrichtung des Markierfelds 51, 52 auf die Position und Lage der Reifengeometrie des realen Reifens 40. Insbesondere der korrekte Arbeitsabstand a ist für eine gleichbleibende Markierung wichtig. Dieser kann abhängig von der Laseroptik der Lasereinrichtung 200 im Bereich von wenigen Millimetern konstant sein müssen.

Vorteilhaft für die Positionierung der Lasereinrichtung 200 ist die feste mechanische Koppelung der Lasereinrichtung 200 mit der Messeinrichtung 100, das heißt der Messbereich 120 und das Arbeitsfeld 210 können in einen festen geometrischen Bezug gebracht werden.

Für den Markiervorgang ist dann lediglich eine entsprechende Re-Positionierung der gesamten Vorrichtung oder Verschieben des Markierfelds 51, 52 innerhalb des Arbeitsfelds 210 notwendig.

Durch die räumliche Positionierung basierend auf der am zu markierende Reifen 40 ermittelten 3-D Kontur ist gewährleistet, dass die Lasereinrichtung 200 senkrecht zur Reifenoberfläche mit korrektem Arbeitsabstand a an einer beliebigen Stelle des Reifen 40 positioniert werden kann.

Insbesondere bei einer Markierung im Bereich der Schulter mit starker Krümmung (30-40°) wie es bei Flugzeugreifen üblich ist, wird ein gleichbleibendes Markierergebnis ermöglicht.

Die Vorrichtung umfasst optional eine Steuereinrichtung 300, welche datentechnisch mit der Messeinrichtung 100 und/oder der Lasereinrichtung 200 verbunden ist, zum Beispiel über Leitungen oder drahtlos. Die Steuereinrichtung 300 weist einen Computer und/oder einen Prozessor auf und führt vorzugsweise die oben beschriebene Ansteuerung der Lasereinrichtung 200 aus. Ferner kann die Steuereinrichtung 300 die von der Messeinrichtung 100 erfassten Daten auswerten und die Position den des spezifischen Merkmals 45 berechnen.

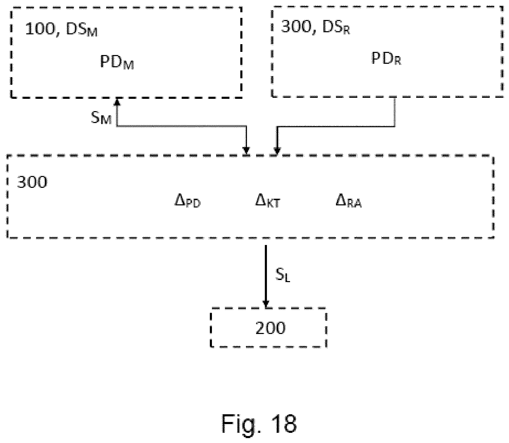

In Fig. 18 ist ein Prinzipschaltbild gezeigt, welches die Übertragung der Daten zwischen der Messeinrichtung 100 und der Lasereinrichtung 200 mit der Steuereinrichtung 300 verdeutlicht.

Die Messeinrichtung 100 generiert einen Messdatensatz DS_{M} zu dem Messbereich 120, indem zumindest ein Teilbereich des Reifens 40 optisch erfasst wird. Diese erste Erfassung des Teilbereichs 120 kann auch durch eine Vor-Messeinrichtung 100_{VOR} durchgeführt werden. In einer vorteilhaften Ausgestaltung ist diese Vor-Messeinrichtung 100_{VOR} separat zu der Messeinrichtung 100 ausgebildet und derart angeordnet, dass diese geeignet ist, den Reifen 40 während des Einlegens in die Markiervorrichtung 10 zu erfassen.

Der generierte Messdatensatz DS_{M} zu dem Messbereich 120 wird anschließend an das Steuergerät 300 zur Verarbeitung zusammen mit einem Referenzdatensatz DS_{R} übermittelt. Zuerst wird das spezifische Merkmal 45 identifiziert, das zugleich ein Referenzpunkt RP für das erste Koordinatensystem K₁ und das zweite Koordinatensystem K₂ darstellt und in dem Messbereich 120 liegt. Anschließend lädt das Steuergerät 300 einen Referenzdatensatz DS_{R} zu dem identifizierten Reifen 40.

Folgend übermittelt das Steuergerät 300 optional ein Steuersignal S_{M} an die Messeinrichtung 100, um diese nochmals relativ zu dem Reifen 40 zu positionieren, so dass die Messeinrichtung 100 den zu markierenden Markierfeld 51, 52 mit einer höheren Auflösung erfasst und somit einen detaillierteren Messdatensatz DS_{M} generiert. Dieser Schritt ist insbesondere relevant, insofern der Reifen 40 mittels einer Vor-Messeinrichtung 100_{VOR} erfasst wird, der lediglich zur ersten Positionierung und Ausrichtung der Messeinrichtung 100 und/oder der Lasereinrichtung 200 dient.

Anschließend gleicht das Steuergerät 300 die Informationen aus dem generierten Messdatensatz DS_{M} mit dem Referenzdatensatz DS_{R} ab. Dabei berechnet das Steuergerät 300 eine Abweichung, auch Offset genannt, zwischen den beiden Datensätzen DS_{M}, DS_{R}. Dabei wird erfindungsgemäß nicht nur die Abweichung des spezifischen Merkmals 45, sondern vor allem auch die Abweichung des Markierfelds 51, 52 der beiden Datensätze berechnet.

Die berechnete Abweichung kann eine Abweichung der Position Δ_{PD}, eine Abweichung der Kontur Δ_{KT} und/oder eine Abweichung der Rollachse Δ_{RA}, wie zuvor beschrieben, sein.

Das Steuergerät 300 übermittelt anschließend ein Steuersignal S_{L} an die Lasereinrichtung 200 unter Berücksichtigung der berechneten Abweichung Δ_{PD}, Δ_{KT}, ORA.

Die Lasereinrichtung 200 wird mittels des Steuersignals S_{L} in eine optimale Position P_{L} zum Einbringen der Markierung 400 positioniert. Die optimale Position P_{L} der Lasereinrichtung 200 weist einen senkrechten Winkel zu der zu markierenden Oberfläche des Markierfelds 52, 52 auf, wie es beispielsweise in Fig. 11a und Fig. 11b gezeigt ist.

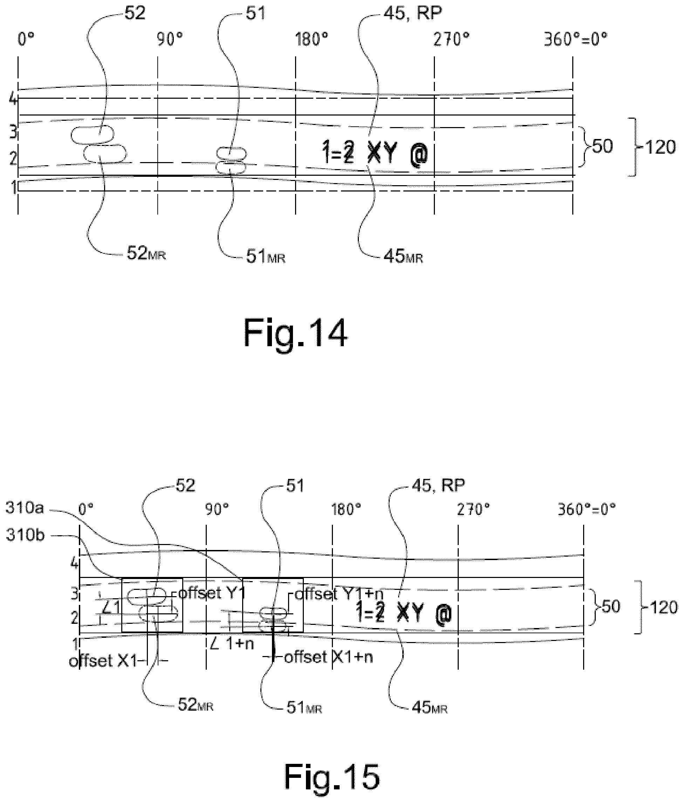

Das Steuersignal S_{L} ist ferner ausgebildet, die Markierung 400 an den Markierfeld 51, 52 unter Berücksichtigung der berechneten Abweichung Δ_{PD}, Δ_{KT}, Δ_{RA} zu korrigieren. Dies ist insbesondere für eine längliche Markierung 400 relevant, die in das Markierfeld 51, 52 eingebracht werden soll, wobei das Markierfeld 51, 52 eine wellenförmige Abweichung oder unterschiedlich ausgeprägte Abweichungen entlang der Markierung aufweist, wie es beispielsweise in Fig. 14 und Fig. 15 gezeigt ist.

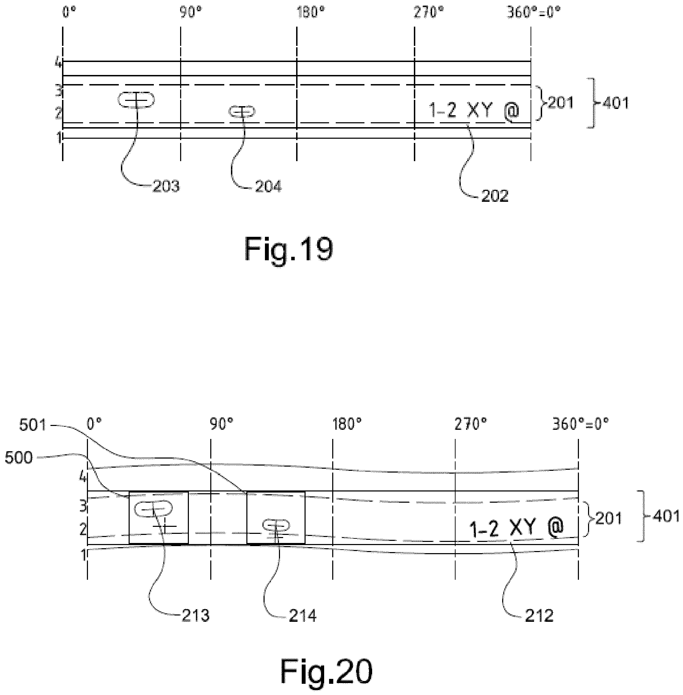

Die Fig. 19 und 20 zeigen einen Referenzdatensatz von einem Reifen 40, einem Masterreifen, mit einem spezifischen Merkmal 202 und den zugehörigen Ist-Datensatz eines zu markierenden oder realen Reifens 40. Der Reifen 40 weist einen ausgewählten Reifenbereich 201 auf, in dem sich das spezifische Merkmal 202 und wenigstens zwei, mit einer Umrandung versehene Markierfelder 203, 204 befinden. Ein Scanbereich 401 der Messeinrichtung 100 erfasst den Reifenbereich 201 vollständig, so dass sichergestellt ist, dass das entsprechende spezifische Merkmal 212 und der oder die Auswertebereiche 500, 501 für das beziehungsweise die Markierfelder 213, 214 am zu markierenden oder realen Reifen 40 durch die Messeinrichtung 100 erkannt werden. Die Markierfelder 213, 214 können somit zuverlässig innerhalb der Auswertebereiche 500, 501 gesucht und bestimmt werden.

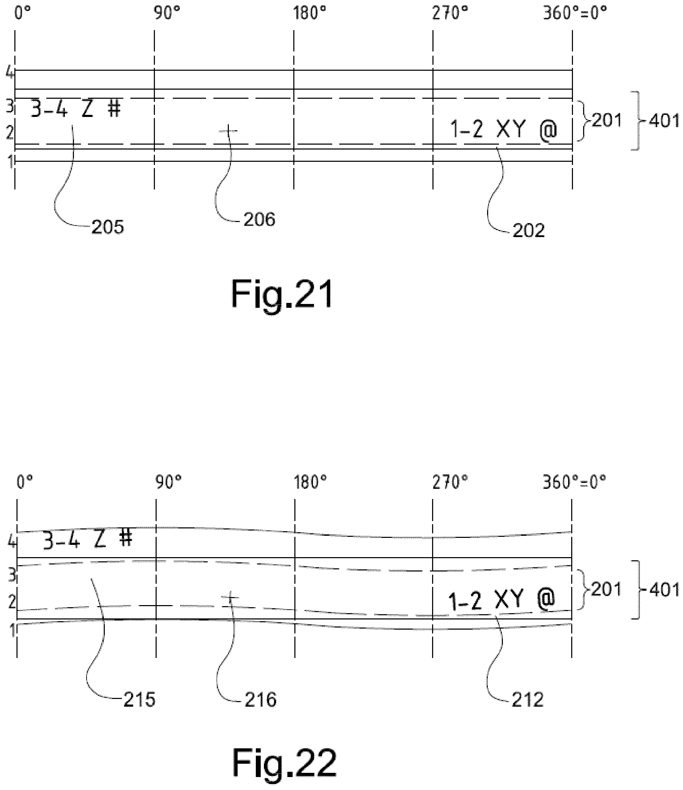

Im Unterschied zu der Ausführungsform gemäß Fig. 19 ist in Fig. 21 ein Referenzdatensatz von einem Reifen 40, einem Masterreifen, mit zwei spezifischen Merkmalen 202, 205 und einem Markierbereich 206, der keine Umrandung aufweist, dargestellt. Der zugehörige Ist-Datensatz eines zu markierenden oder realen Reifens 40 ist in Fig. 22 dargestellt. Das Vorhandensein von zwei spezifischen Merkmalen 202, 205 ermöglicht eine Ausrichtung des Markierfelds 216 am realen oder zu markierenden Reifen 40, und zwar ohne dass es notwendig wäre, das Markierfeld 216 anhand der Umrandung des Markierbereichs zu suchen und zu bestimmen. Umso mehr spezifische Merkmale 212, 215 über den Umfang des Reifens 40 verteilt sind und durch die Messeinrichtung 100 erfasst und eingelernt werden, umso genauer kann das Zentrum des Markierfelds 216 auf dem zu markierenden Reifen 40 bestimmt werden.

### Bezugszeichenliste

| | | | |
|---|---|---|---|
| 10 | Markiervorrichtung | | |
| 11 | Maschinenuntergestell | 50 | Markierkorridor |
| 12a | Maschinenaufbau Basis (fest) | 51 | Markierfeld |
| 12b | Maschinenaufbau Oberteil (beweglich) | 52 | Markierfeld |
| | | 51_{MR} | Markierfeld des Masterreifens |
| 13 | Fördereinrichtung | 52_{MR} | Markierfeld des Masterreifens |
| 13a | Fördereinrichtung Teil 1 | | |
| 13b | Fördereinrichtung Teil 2 | 100_{VOR} | Vor-Messeinrichtung |
| 14 | Drehantrieb | 100 | Messeinrichtung |
| 15 | Drehvorrichtung | 101 | radiale Verschiebeeinrichtung |
| 15_{DA} | Drehachse | 102 | axiale Verschiebeeinrichtung |
| 16 | radiale Verschiebeeinrichtung | 103 | Schwenkeinrichtung |
| 17 | Haltevorrichtung | | |
| 18 | Anschlag zur Zentrierung | 100U | Untere Messeinrichtung |
| 19a | obere Reifenaufnahme | 101U | radiale Verschiebeeinrichtung |
| 19b | untere Reifenaufnahme | 102U | axiale Verschiebeeinrichtung |
| 20 | Abrolleinheit | 103U | Schwenkeinrichtung |
| P | Prozessrichtung | | |
| P1 | erste Position | 110 | Messlinie |
| P2 | zweite Position | 120 | Messbereich / Abbildung |
| 40 | Reifen | 200 | Lasereinrichtung |
| 40_{MR} | Masterreifen | 200U | Untere Lasereinrichtung |
| 41 | Obere Seitenwand | 201 | radiale Verschiebeeinrichtung oder Reifenbereich |
| 42 | Reifenwulst | | |
| 43 | Untere Seitenwand | 202 | axiale Verschiebeeinrichtung oder Merkmal 1 Masterreifen |
| 45 | spezifisches Merkmal | | |
| 45_{MR} | spezifisches Merkmal des Masterreifens | 203 | Schwenkeinrichtung oder Markierfeld 1 Masterreifen |
| 47 | Reifenwulst | 204 | Markierfeld 1+n Masterreifen |
| 205 | Merkmal 2 Masterreifen | r | Radius |
| 206 | Zentrum Markierbereich ohne Umrandung | | |
| | | S_{L} | Steuersignal für die Laserein-richtung |
| 210 | Arbeitsfeld | | |
| 212 | Merkmal 1 realer Reifen | S_{M} | Steuersignal für die Messein-richtung |
| 213 | Markierfeld 1 realer Reifen | | |
| 214 | Markierfeld 1+n realer Reifen | DS_{R} | Referenzdatensatz |
| 215 | Merkmal 2 realer Reifen | PD_{R} | Soll-Positionsdaten |
| 216 | Ist-Position Zentrum Markierfeld ohne Umrandung | DS_{M} | Messdatensatz |
| | | PD_{M} | IST-Positionsdaten |
| | | P_{M} | Messposition |
| 300 | Steuereinrichtung | P_{L} | Markierposition |
| 310a | Auswertebereich | Δ_{PD} | Abweichung der Positionsda-ten |
| 310b | Auswertebereich | | |
| | | Δ_{KT} | Abweichung der Kontur |
| 400 | Markierung | Δ_{RA} | Abweichung der Rollachse |
| 401 | Scanbereich Messeinrichtung / Scanner | | |
| | | K₁ | ersten Koordinatensystem |
| 500 | Abstandssensor oder Auswertebereich 1 | K₂ | zweiten Koordinatensystem |
| 501 | Auswertebereich 1+n | a | Abstand |
| RP | Referenzpunkt | | |
| R | Rollachse | | |
| α | Winkel | | |

## Patentansprüche

1. Verfahren zum Markieren von Reifen (40) mittels Laserstrahlen,
das bei einer Markiervorrichtung (10) verwendet wird, die zumindest eine Messeinrichtung (100), eine Lasereinrichtung (200), eine Steuereinrichtung (300) und eine um eine Drehachse (15_{DA}) rotierbare Haltevorrichtung (17) umfasst;
wobei die Reifen (40) eine Lauffläche, eine erste, in einer liegenden Position obere Seitenwand (41), eine zweite, in einer liegenden Position untere Seitenwand (43), eine Rollachse (R) und ein spezifisches Merkmal (45) haben und wenigstens ein Markierfeld (51, 52) definieren, in dem der Reifen (40) zu markieren ist;
wobei die Steuereinrichtung (300) ausgebildet ist, einen Referenzdatensatz (DS_{R}) zu verarbeiten und Steuersignale (S_{L}) für zumindest die Lasereinrichtung (200) zu generieren;
wobei die Messeinrichtung (100) relativ zu dem Reifen (40) bewegbar und ausgebildet ist, zumindest einen Teilbereich des Reifens (40) optisch zu erfassen;
wobei die ein Arbeitsfeld (210) aufweisende Lasereinrichtung (200) relativ zu dem Reifen (40) bewegbar und ausgebildet ist, mittels Laserstrahlen eine Markierung (400) in dem sich in dem Arbeitsfeld (210) befindenden Markierfeld (51, 52) zu erzeugen;
wobei die Haltevorrichtung (17) geeignet ist, den Reifen (40) zu ergreifen und auszurichten; und
wobei der Referenzdatensatz (DS_{R}) Referenzdaten (PD_{R}) über zumindest die Soll-Position des spezifischen Merkmals (45) des Reifens (40), die Soll-Position des Markierfelds (51, 52) des Reifens (40) und die zu erzeugende Markierung (400) umfasst;
wobei das Verfahren folgende Verfahrensschritte aufweist:
a) ein zu markierender Reifen (40) wird zu der Markiervorrichtung (10) gefördert;
b) ein dem Reifen (40) zugeordneter Referenzdatensatz (DS_{R}) wird in die Steuereinrichtung (300) geladen;
c) zumindest ein Teilbereich des Reifens (40) wird mittels der Messeinrichtung (100) optisch erfasst, wobei ein Messdatensatz (DS_{M}) generiert wird, der Ist-Daten (PD_{M}) über zumindest die Ist-Position des spezifischen Merkmals (45) und/oder die Ist-Position des Markierfelds (51, 52) des Reifens (40) umfasst;
d1) wobei die Ist-Position des Markierfelds (51, 52) des Reifens (40) durch den Referenzdatensatz (DS_{R}) eingegrenzt und optisch bestimmt wird; oder
d2) wobei eine Abweichung (Δ_{PD}) zwischen den Referenzdaten (PD_{R}) und den Ist-Daten (PD_{M}) berechnet wird;
e) die Steuereinrichtung (300) generiert das Steuersignal (S_{L}) für die Lasereinrichtung (200) unter Berücksichtigung des Messdatensatzes (DS_{M});
f) die Lasereinrichtung (200) wird mittels des Steuersignals (S_{L}) in einer Markierposition (P_{L}) positioniert und in Bezug auf die Ist-Position des Markierfelds (51, 52) ausgerichtet;
g) die Markierung (400) wird mittels der Lasereinrichtung (200) in dem Markierfeld (51, 52) erzeugt.

2. Verfahren nach Anspruch 1, **dadurch gekennzeichnet, dass** die Markierung (400) durch das Steuersignal (S_{L}) kalibriert wird.

3. Verfahren nach Anspruch 1 oder 2, **dadurch gekennzeichnet, dass** die Markiervorrichtung (50) eine Vor-Messeinrichtung (100_{VOR}) umfasst, die ausgebildet ist, Vor-Messdaten (DS_{M}) zu dem Reifen (40) zu erfassen;
wobei vorzugsweise die Vor-Messdaten (DS_{M}) vor dem Verfahrensschritt b) erfasst werden;
wobei ferner vorzugsweise die Messeinrichtung (100) und/oder die Lasereinrichtung (200) durch die Vor-Messdaten (DS_{M}) vorpositioniert werden.

4. Verfahren nach einem der Ansprüche 1 bis 3, **dadurch gekennzeichnet, dass** der Reifen (40) mittels der Haltevorrichtung (10) zentriert wird.

5. Verfahren nach einem der Ansprüche 1 bis 4, **dadurch gekennzeichnet, dass** der Referenzdatensatz (DS_{R}) und der Messdatensatz (DS_{M}) eine Kontur des Reifens (40) umfassen;
wobei eine Abweichung (Δ_{KT}) zwischen einer Soll-Kontur des Reifens (40) und einer Ist-Kontur des Reifens (40) berechnet und das Steuersignal (S_{L}) für die Lasereinrichtung (200) unter Berücksichtigung der berechneten Abweichung (Δ_{KT}) generiert wird.

6. Verfahren nach Anspruch 5, **dadurch gekennzeichnet, dass** die Ist-Kontur des Reifens (40) zumindest die obere Seitenwand (41) des Reifens (40) und/oder die untere Seitenwand (43) des Reifens (40) umfasst;
wobei vorzugsweise die Ist-Kontur der oberen Seitenwand (43) des Reifens (40) gespiegelt wird, um die Ist-Kontur der unteren Seitenwand (43) des Reifens (40) zu generieren.

7. Verfahren nach einem der Ansprüche 1 bis 6, **dadurch gekennzeichnet, dass** aus dem Messdatensatz (DS_{M}) ein dreidimensionales Modell des Reifens (40) erstellt wird.

8. Verfahren nach einem der Ansprüche 1 bis 7, **dadurch gekennzeichnet, dass** der Referenzdatensatz (DS_{R}) und der Messdatensatz (DS_{M}) die Rollachse (R) des Reifens (40) umfasst;
wobei eine Abweichung (Δ_{RA}) zwischen der Soll-Rollachse (R) des Reifens (40) und der Ist-Rollachse (R) des Reifens (40) berechnet und das Steuersignal (S_{L}) für die Lasereinrichtung (200) unter Berücksichtigung der berechneten Abweichung (Δ_{RA}) generiert wird; und
wobei vorzugsweise die Soll-Positionsdaten (PD_{R}) und/oder die Ist-Positionsdaten (PD_{M}) durch einen von dem spezifischen Merkmal (45) ausgehenden Winkel (α) und einen von der Rollachse (R) ausgehenden Radius (r) bestimmt werden.

9. Verfahren nach einem der Ansprüche 1 bis 8, **dadurch gekennzeichnet, dass** die Steuereinrichtung (300) ferner ausgebildet ist, Steuersignale (S_{M}) für die Messeinrichtung (100) zu generieren;
wobei vorzugsweise die Messeinrichtung (100) in einer vorbestimmten Messposition (P_{M}) in Bezug auf den Reifen (40) ausgerichtet wird; und
wobei sich die Messposition (P_{M}) in einem vorbestimmten Abstand (a) zu dem Reifen (40) befindet.

10. Verfahren nach einem der Ansprüche 1 bis 9, **dadurch gekennzeichnet, dass** die Messeinrichtung (100) in einem ersten Koordinatensystem (K₁) verfahren wird und die Lasereinrichtung (200) in einem zweiten Koordinatensystem (K₂) verfahren wird;
wobei das erste Koordinatensystem (K₁) in einem vorgegebenen Verhältnis zu dem zweiten Koordinatensystem (K₂) steht;
wobei vorzugsweise das vorgegebene Verhältnis ein konstantes Verhältnis ist;
wobei ferner vorzugsweise das spezifische Merkmal (45) einen Referenzpunkt (RP) für das erste Koordinatensystem (K₁) und das zweite Koordinatensystem (K₂) bildet;
wobei ferner vorzugsweise der Referenzpunkt (RP) ein Nullpunkt ist und
wobei ferner vorzugsweise das erste Koordinatensystem (K₁) und das zweite Koordinatensystem (K₂) anhand des Referenzpunkts (RP) ausgerichtet werden; und
wobei ferner vorzugsweise die Messeinrichtung (100) und die Lasereinrichtung (200) mittels Steuersignalen (S_{L}) bewegt werden, welche aus Positionsdaten relativ zu dem Referenzpunkt (RP) generiert werden.

11. Verfahren nach einem der Ansprüche 1 bis 10, **dadurch gekennzeichnet, dass** das Steuergerät (300) die zu erzeugende Markierung (400) anhand des Ist-Markierfelds (51, 52) bestimmt.

12. Verfahren nach einem der Ansprüche 1 bis 11, **dadurch gekennzeichnet, dass** der Referenzdatensatz (DS_{R}) erstellt wird, indem ein Masterreifen (40_{MR}) mittels der Messeinrichtung (200) erfasst wird.

13. Markiervorrichtung (10) zum Durchführen des Verfahrens nach einem der Ansprüche 1 bis 12, aufweisend:
eine Messeinrichtung (100),
eine Lasereinrichtung (200),
eine Steuereinrichtung (300) und
eine Haltevorrichtung (17), die um eine Drehachse (15_{DA}) rotierbar ist,
wobei die Haltevorrichtung (17) geeignet ist, einen Reifen (40) zu ergreifen und auszurichten;
wobei der Reifen (40) eine Lauffläche, eine erste, in einer liegenden Position obere Seitenwand (41), eine zweite, in einer liegenden Position untere Seitenwand (43), eine Rollachse (R) und ein spezifisches Merkmal (45) hat und wenigstens ein Markierfeld (51, 52) definiert, in dem der Reifen (40) zu markieren ist;
wobei die Steuereinrichtung (300) ausgebildet ist, einen Referenzdatensatz (DS_{R}) zu verarbeiten und Steuersignale (S_{L}) für zumindest die Lasereinrichtung (200) zu generieren;
wobei die Messeinrichtung (100) relativ zu dem Reifen (40) bewegbar und ausgebildet ist, zumindest einen Teilbereich des Reifens (40) optisch zu erfassen;
wobei die ein Arbeitsfeld (210) aufweisende Lasereinrichtung (200) relativ zu dem Reifen (40) bewegbar und ausgebildet ist, mittels Laserstrahlen eine Markierung (400) in dem sich in dem Arbeitsfeld (210) befindenden Markierfeld (51, 52) zu erzeugen; und
wobei der Referenzdatensatz (DS_{R}) Referenzdaten (PD_{R}) über zumindest die Soll-Position des spezifischen Merkmals (45) des Reifens (40), die Soll-Position des Markierfelds (51, 52) des Reifens (40) und die zu erzeugende Markierung (400) umfasst.

14. Markiervorrichtung (10) nach Anspruch 13, **gekennzeichnet durch** eine Vor-Messeinrichtung (100_{VOR});
wobei vorzugsweise die Vor-Messeinrichtung (100_{VOR} ) ein Punktsensor ist.

15. Markiervorrichtung (10) nach Anspruch 12 oder 13, **dadurch gekennzeichnet, dass** die Messeinrichtung (100) in einem ersten Koordinatensystem (K₁) verfahrbar ist und die Lasereinrichtung (200) in einem zweiten Koordinatensystem (K₂) verfahrbar ist;
wobei das erste Koordinatensystem (K₁) in einem vorgegebenen Verhältnis zu dem zweiten Koordinatensystem (K₂) steht;
wobei vorzugsweise das vorgegebene Verhältnis ein konstantes Verhältnis ist;
wobei ferner vorzugsweise das spezifische Merkmal (45) einen Referenzpunkt (RP) für das erste Koordinatensystem (K₁) und das zweite Koordinatensystem (K₂) bildet;
wobei ferner vorzugsweise der Referenzpunkt (RP) ein Nullpunkt ist.

## Claims

1. Method for marking tires (40) by means of laser beams,
which is used in a marking device (10) comprising at least a measuring device (100), a laser device (200), a control device (300) and a holding device (17) rotatable about an axis of rotation (15_{DA});
wherein the tires (40) have a tread, a first sidewall (41) which is upper in a lying position, a second sidewall (43) which is lower in a lying position, a rolling axis (R) and a specific feature (45), and define at least one marking field (51, 52) in which the tire (40) is to be marked;
wherein the control device (300) is designed to process a reference data set (DS_{R}) and to generate control signals (S_{L}) for at least the laser device (200);
wherein the measuring device (100) is movable relative to the tire (40) and is configured to optically detect at least a partial area of the tire (40);
wherein the laser device (200) having a working field (210) is movable relative to the tire (40) and is configured to produce a marking (400) in the marking field (51, 52) located in the working field (210) by means of laser beams;
wherein the holding device (17) is adapted to grip and align the tire (40); and
wherein the reference data set (DS_{R}) comprises reference data (PD_{R}) about at least the nominal position of the specific feature (45) of the tire (40), the nominal position of the marking field (51, 52) of the tire (40) and the marking (400) to be produced;
wherein the method comprises the following process steps:
a) a tire (40) to be marked is conveyed to the marking device (10);
b) a reference data set (DS_{R}) assigned to the tire (40) is loaded into the control device (300);
c) at least a partial area of the tire (40) is optically detected by means of the measuring device (100), whereby a measurement data record (DS_{M}) is generated, which comprises actual data (PD_{M}) on at least the actual position of the specific feature (45) and/or the actual position of the marking field (51, 52) of the tire (40);
d1) wherein the actual position of the marking field (51, 52) of the tire (40) is delimited and optically determined by the reference data set (DS_{R}); or
d2) wherein a deviation (Δ_{PD}) between the reference data (PD_{R}) and the actual data (PD_{M}) is calculated;
e) the control device (300) generates the control signal (S_{L}) for the laser device (200), taking into account the measurement data set (DS_{M});
f) the laser device (200) is positioned in a marking position (P_{L}) by means of the control signal (S_{L}) and aligned in relation to the actual position of the marking field (51, 52);
g) the marking (400) is created in the marking field (51, 52) by means of the laser device (200).

2. Method according to claim 1, **characterised in that** the marking (400) is calibrated by the control signal (S_{L}).

3. Method according to claim 1 or 2, **characterised in that** the marking device (50) comprises a pre-measuring device (100_{VOR}) which is configured to measure pre-measurement data (DS_{M}) relating to the tire (40);
wherein the pre-measurement data (DS_{M}) is preferably measured before method step b);
wherein, furthermore, the measuring device (100) and/or the laser device (200) are preferably pre-positioned by the pre-measurement data (DS_{M}).

4. Method according to any one of claims 1 to 3, **characterised in that** the tire (40) is centred by means of the holding device (10).

5. Method according to any one of claims 1 to 4, **characterised in that** the reference data set (DS_{R}) and the measurement data set (DS_{M}) comprise a contour of the tire (40);
wherein a deviation (Δ_{KT}) between a nominal contour of the tire (40) and an actual contour of the tire (40) is calculated, and the control signal (S_{L}) for the laser device (200) is generated taking into account the calculated deviation (Δ_{KT}).

6. Method according to claim 5, **characterised in that** the actual contour of the tire (40) comprises at least the upper sidewall (41) of the tire (40) and/or the lower sidewall (43) of the tire (40);
wherein preferably the actual contour of the upper sidewall (43) of the tire (40) is mirrored in order to generate the actual contour of the lower sidewall (43) of the tire (40).

7. Method according to any one of claims 1 to 6, **characterised in that** a three-dimensional model of the tire (40) is created from the measurement data set (DS_{M}).

8. Method according to any one of claims 1 to 7, **characterised in that** the reference data set (DS_{R}) and the measurement data set (DS_{M}) comprise the rolling axis (R) of the tire (40);
wherein a deviation (Δ_{RA}) between the nominal rolling axis (R) of the tire (40) and the actual rolling axis (R) of the tire (40) is calculated, and the control signal (S_{L}) for the laser device (200) is generated taking into account the calculated deviation (Δ_{RA}); and
wherein preferably the nominal position data (PD_{R}) and/or the actual position data (PD_{M}) are determined by an angle (α) emanating from the specific feature (45) and a radius (r) emanating from the rolling axis (R).

9. Method according to any one of claims 1 to 8, **characterised in that** the control device (300) is also configured to generate control signals (S_{M}) for the measuring device (100);
wherein preferably the measuring device (100) is aligned in a predetermined measuring position (P_{M}) with respect to the tire (40); and
wherein the measuring position (P_{M}) is located at a predetermined distance (a) from the tire (40).

10. Method according to any one of claims 1 to 9, **characterised in that** the measuring device (100) is moved in a first coordinate system (K₁), and the laser device (200) is moved in a second coordinate system (K₂);
wherein the first coordinate system (K₁) is in a predetermined ratio to the second coordinate system (K₂);
wherein the predetermined ratio is preferably a constant ratio;
wherein further preferably the specific feature (45) forms a reference point (RP) for the first coordinate system (K₁) and the second coordinate system (K₂);
wherein further preferably the reference point (RP) is a zero point, and
wherein further preferably the first coordinate system (K₁) and the second coordinate system (K₂) are aligned using the reference point (RP); and
wherein furthermore the measuring device (100) and the laser device (200) are preferably moved by means of control signals (S_{L}), which are generated from position data relative to the reference point (RP).

11. Method according to any one of claims 1 to 10, **characterised in that** the control device (300) determines the marking (400) to be generated on the basis of the actual marking field (51, 52).

12. Method according to any one of claims 1 to 11, **characterised in that** the reference data set (DS_{R}) is created by detecting a master tire (40_{MR}) by means of the measuring device (200).

13. Marking device (10) for performing the method according to any one of claims 1 to 12, comprising:
a measuring device (100),
a laser device (200),
a control device (300), and
a holding device (17) which is configured to be rotated about an axis of rotation (15_{DA}),
wherein the holding device (17) is suitable for gripping and aligning a tire (40);
wherein the tire (40) has a tread, a first sidewall (41) which is upper in a lying position, a second sidewall (43) which is lower in a lying position, a rolling axis (R) and a specific feature (45), and defines at least one marking field (51, 52) in which the tire (40) is to be marked;
wherein the control device (300) is configured to process a reference data set (DS_{R}) and to generate control signals (S_{L}) for at least the laser device (200);
wherein the measuring device (100) is movable relative to the tire (40) and is configured to optically detect at least a partial area of the tire (40);
wherein the laser device (200) having a working field (210) is movable relative to the tire (40) and is configured to produce a marking (400) in the marking field (51, 52) located in the working field (210) by means of laser beams; and
wherein the reference data set (DS_{R}) comprises reference data (PD_{R}) about at least the nominal position of the specific feature (45) of the tire (40), the nominal position of the marking field (51, 52) of the tire (40) and the marking (400) to be produced.

14. Marking device (10) according to claim 13, **characterised by** a pre-measuring device (100VOR)
wherein the pre-measuring device (100_{VOR}) is preferably a point sensor.

15. Marking device (10) according to claim 12 or 13, **characterised in that** the measuring device (100) is movable in a first coordinate system (K₁) and the laser device (200) is movable in a second coordinate system (K₂);
wherein the first coordinate system (K₁) is in a predetermined ratio to the second coordinate system (K₂);
wherein the predetermined ratio is preferably a constant ratio;
wherein further preferably the specific feature (45) forms a reference point (RP) for the first coordinate system (K₁) and the second coordinate system (K₂);
wherein the reference point (RP) is preferably a zero point.

## Revendications

1. Procédé de marquage de pneus (40) au moyen de rayons laser,
qui est utilisé dans un dispositif de marquage (10) qui comprend au moins un dispositif de mesure (100), un dispositif laser (200), un dispositif de commande (300) et un dispositif de maintien (17) pouvant tourner autour d'un axe de rotation (15_{DA}) ;
les pneus (40) ayant une bande de roulement, un premier flanc supérieur (41) dans une position couchée, un second flanc inférieur (43) dans une position couchée, un axe de roulage (R) et une caractéristique spécifique (45) et définissant au moins un champ de marquage (51, 52) dans lequel le pneu (40) doit être marqué ;
le dispositif de commande (300) étant conçu pour traiter un jeu de données de référence (DS_{R}) et pour générer des signaux de commande (S_{L}) pour au moins le dispositif laser (200) ;
le dispositif de mesure (100) étant mobile par rapport au pneu (40) et étant conçu pour détecter optiquement au moins une zone partielle du pneu (40) ;
le dispositif laser (200) présentant un champ de travail (210) étant mobile par rapport au pneu (40) et conçu pour produire un marquage (400) au moyen de rayons laser dans le champ de marquage (51, 52) se trouvant dans le champ de travail (210) ;
dans lequel le dispositif de maintien (17) est adapté pour saisir et aligner le pneu (40) ; et
le jeu de données de référence (DS_{R}) comprenant des données de référence (PD_{R}) concernant au moins la position de consigne de la caractéristique spécifique (45) du pneu (40), la position de consigne du champ de marquage (51, 52) du pneu (40) et le marquage (400) à produire ;
le procédé comprenant les étapes de procédé suivantes :
a) un pneu (40) à marquer est transporté vers le dispositif de marquage (10) ;
b) un jeu de données de référence (DS_{R}) associé au pneu (40) est chargé dans le dispositif de commande (300) ;
c) au moins une zone partielle du pneu (40) est détectée optiquement au moyen du dispositif de mesure (100), un jeu de données de mesure (DS_{M}) étant généré, lequel comprend des données réelles (PD_{M}) concernant au moins la position réelle de la caractéristique spécifique (45) et/ou la position réelle du champ de marquage (51, 52) du pneu (40) ;
d1) la position réelle du champ de marquage (51, 52) du pneu (40) étant délimitée par le jeu de données de référence (DS_{R}) et déterminée optiquement ; ou
d2) dans lequel un écart (Δ_{PD}) entre les données de référence (PD_{R}) et les données réelles (PD_{M}) est calculé ;
e) le dispositif de commande (300) génère le signal de commande (S_{L}) pour le dispositif laser (200) en tenant compte du jeu de données de mesure (DS_{M}) ;
f) le dispositif laser (200) est positionné dans une position de marquage (P_{L}) au moyen du signal de commande (S_{L}) et aligné par rapport à la position réelle du champ de marquage (51, 52) ;
g) le marquage (400) est produit au moyen du dispositif laser (200) dans le champ de marquage (51, 52).

2. Procédé selon la revendication 1, **caractérisé en ce que** le marqueur (400) est calibré par le signal de commande (S_{L}).

3. Procédé selon la revendication 1 ou 2, **caractérisé en ce que** le dispositif de marquage (50) comprend un dispositif de pré-mesure (100_{VOR}) adapté pour acquérir des données de pré-mesure (DS_{M}) concernant le pneu (40) ;
les données de pré-mesure (DS_{M}) étant de préférence saisies avant l'étape b) du procédé ;
le dispositif de mesure (100) et/ou le dispositif laser (200) étant en outre de préférence prépositionnés par les données de pré-mesure (DS_{M}).

4. Procédé selon l'une des revendications 1 à 3, **caractérisé en ce que** le pneu (40) est centré au moyen du dispositif de maintien (10).

5. Procédé selon l'une des revendications 1 à 4, **caractérisé en ce que** le jeu de données de référence (DS_{R}) et le jeu de données de mesure (DS_{M}) comprennent un contour du pneu (40) ;
dans lequel un écart (Δ_{KT}) entre un contour nominal du pneu (40) et un contour réel du pneu (40) étant calculé et le signal de commande (S_{L}) pour le dispositif laser (200) étant généré en tenant compte de l'écart calculé (Δ_{KT}).

6. Procédé selon la revendication 5, **caractérisé en ce que** le contour réel du pneu (40) comprend au moins le flanc supérieur (41) du pneu (40) et/ou le flanc inférieur (43) du pneu (40) ;
dans lequel, de préférence, le contour réel du flanc supérieur (43) du pneu (40) est réfléchi pour générer le contour réel du flanc inférieur (43) du pneu (40).

7. Procédé selon l'une des revendications 1 à 6, **caractérisé en ce qu'**un modèle tridimensionnel du pneu (40) est créé à partir du jeu de données de mesure (DS_{M}).

8. Procédé selon l'une quelconque des revendications 1 à 7, **caractérisé en ce que** le jeu de données de référence (DS_{R}) et le jeu de données de mesure (DS_{M}) comprennent l'axe de roulage (R) du pneu (40) ;
dans lequel un écart (Δ_{RA}) entre l'axe de roulage nominal (R) du pneu (40) et l'axe de roulage réel (R) du pneu (40) étant calculé et le signal de commande (S_{L}) pour le dispositif laser (200) étant généré en tenant compte de l'écart calculé (Δ_{RA}) ; et
dans lequel, de préférence, les données de position de consigne (PD_{R}) et/ou les données de position réelle (PD_{M} ) étant déterminées par un angle (α) partant de la caractéristique spécifique (45) et un rayon (r) partant de l'axe de roulage (R).

9. Procédé selon l'une des revendications 1 à 8, **caractérisé en ce que** le dispositif de commande (300) est en outre conçu pour générer des signaux de commande (S_{M}) pour le dispositif de mesure (100) ;
dans lequel, de préférence, le dispositif de mesure (100) est orienté dans une position de mesure prédéterminée (P_{M}) par rapport au pneu (40) ; et
la position de mesure (P_{M}) étant située à une distance prédéterminée (a) du pneu (40).

10. Procédé selon l'une des revendications 1 à 9, **caractérisé en ce que** le dispositif de mesure (100) est déplacé dans un premier système de coordonnées (K₁) et le dispositif laser (200) est déplacé dans un deuxième système de coordonnées (K₂) ;
dans lequel le premier système de coordonnées (K₁) est dans un rapport prédéterminée avec le deuxième système de coordonnées (K₂) ;
le rapport prédéterminé étant de préférence un rapport constant ;
dans lequel en outre, de préférence, la caractéristique spécifique (45) forme un point de référence (RP) pour le premier système de coordonnées (K₁) et le deuxième système de coordonnées (K₂) ;
le point de référence (RP) étant de préférence un point zéro, et
dans lequel, en outre, de préférence, le premier système de coordonnées (K₁) et le deuxième système de coordonnées (K₂) sont alignés à l'aide du point de référence (RP) ; et
dans lequel, en outre, le dispositif de mesure (100) et le dispositif laser (200) sont de préférence déplacés au moyen de signaux de commande (S_{L}), qui sont générés à partir de données de position par rapport au point de référence (RP).

11. Procédé selon l'une des revendications 1 à 10, **caractérisé en ce que** dispositif de commande (300) détermine le marquage (400) à produire à l'aide du champ de marquage réel (51, 52).

12. Procédé selon l'une des revendications 1 à 11, **caractérisé en ce que** le jeu de données de référence (DS_{R}) est créé en détectant un pneu maître (40_{MR}) au moyen du dispositif de mesure (200).

13. Dispositif de marquage (10) pour la mise en oeuvre du procédé selon l'une quelconque des revendications 1 à 12, comprenant :
un dispositif de mesure (100),
un dispositif laser (200),
un dispositif de commande (300) et
un dispositif de maintien (17) qui peut tourner autour d'un axe de rotation (15_{DA})
dans lequel le dispositif de maintien (17) est adapté pour saisir et aligner un pneu (40) ;
le pneu (40) ayant une bande de roulement, un premier flanc supérieur (41) dans une position couchée, un second flanc inférieur (43) dans une position couchée, un axe de roulage (R) et une caractéristique spécifique (45) et définissant au moins un champ de marquage (51, 52) dans lequel le pneu (40) doit être marqué ;
le dispositif de commande (300) étant conçu pour traiter un jeu de données de référence (DS_{R}) et pour générer des signaux de commande (S_{L}) pour au moins le dispositif laser (200) ;
le dispositif de mesure (100) étant mobile par rapport au pneu (40) et étant conçu pour détecter optiquement au moins une zone partielle du pneu (40) ;
le dispositif laser (200) présentant un champ de travail (210) étant mobile par rapport au pneu (40) et étant conçu pour produire, au moyen de rayons laser, un marquage (400) dans le champ de marquage (51, 52) se trouvant dans le champ de travail (210) ; et
le jeu de données de référence (DS_{R}) comprenant des données de référence (PD_{R}) concernant au moins la position nominal de la caractéristique spécifique (45) du pneu (40), la position nominal du champ de marquage (51, 52) du pneu (40) et le marquage (400) à produire.

14. Dispositif de marquage (10) selon la revendication 13, **caractérisé par** un dispositif de pré-mesure (100_{VOR}) ;
dans lequel, de préférence, le dispositif de pré-mesure (100_{VOR}) est un capteur ponctuel.

15. Dispositif de marquage (10) selon la revendication 12 ou 13, **caractérisé en ce que** le dispositif de mesure (100) est déplaçable dans un premier système de coordonnées (K₁) et le dispositif laser (200) est déplaçable dans un deuxième système de coordonnées (K₂) ;
dans lequel le premier système de coordonnées (K₁) est dans un rapport prédéterminée avec le deuxième système de coordonnées (K₂) ;
dans lequel le rapport prédéterminé étant de préférence un rapport constant
dans lequel en outre, de préférence, la caractéristique spécifique (45) forme un point de référence (RP) pour le premier système de coordonnées (K₁) et le deuxième système de coordonnées (K₂) ;
dans lequel, en outre, le point de référence (RP) est de préférence un point zéro.
